(19) Europäisches Patentamt
European Patent Office
Office européen des brevets

(11) **EP 1 596 383 A2**

(12) **EUROPEAN PATENT APPLICATION**

(43) Date of publication:
16.11.2005 Bulletin 2005/46

(51) Int Cl.$^7$: **G11B 7/135**

(21) Application number: **05103784.4**

(22) Date of filing: **06.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.05.2004 JP 2004140311**

(71) Applicant: **Konica Minolta Opto, Inc.**
**Hachioji-shi, Tokyo 192-8505 (JP)**

(72) Inventors:
• **Hashimura, Junji Konica Minolta Opto, Inc.**
**192-8505, Tokyo (JP)**
• **Saito, Shinichiro Konica Minolta Opto, Inc.**
**192-8505, Tokyo (JP)**
• **Kimura, Tohru Konica Minolta Opto, Inc.**
**192-8505, Tokyo (JP)**

(74) Representative: **Henkel, Feiler & Hänzel**
**Möhlstrasse 37**
**81675 München (DE)**

(54) **Optical pickup apparatus**

(57) An optical pickup apparatus for recording/reproducing information onto/from a first and a second optical information recording media respectively having a first and second protective layers with a thickness of t1 and t2, using first light beams having a wavelength λ1, the optical pickup apparatus comprises, a first light source having the wavelength of λ1, a first and a second objective optical elements, wherein when recording/reproducing the information onto/from the first optical information recording media, one of the first and the second objective optical lenses is used to condense the first light beams onto a first information recording surface and when recording/reproducing the information onto/from the second optical information recording medium, the other objective optical lens is used to condense the first light beams onto a second information recording surface, wherein the thickness of t1 and the thickness of t2 satisfy a following formula, 2.5<t2/t1.

**FIG. 5**

EP 1 596 383 A2

**Description**

This application claims priority from Japanese Patent Application No. JP2004-140311 filed on May 10, 2004, which is incorporated hereinto by reference.

**FIELD OF THE INVENTION**

The present invention relates to an optical pickup apparatus recording and/or reproducing information onto/from various kinds of optical recording media.

**BACKGROUND OF THE INVENTION**

In recent years, tendency of a shorter wavelength of laser beam as a light source which has been used to record and/or reproduce information onto/from optical discs, has become a main stream. For example, a blue-violet semiconductor laser diode, a blue-SHG laser diode performing wavelength conversion of an infrared semiconductor laser diode utilizing a second harmonic wave, etc., having 400 - 420 nm wavelength have been made practical.

It becomes possible to record information of 15 - 20 GB onto an optical disc having a diameter of 12 cm by using a blue-violet laser source and a objective lens having NA (Numerical aperture) which is the same as a DVD (Digital Versatile Disc). When NA is 0.85, 23 -25 GB information can be recorded onto the optical disc having a diameter of 12 cm. In this specification, the optical disc and a optical-magnetic disc using a blue-violet laser source are called "a high density optical disc"

At this moment, two industrial standards for the high density optical disc have been proposed. One is Blu-Ray disc (it will be called BD hereinafter) having a thickness of 0.1 mm where an objective lens having a NA 0.85, is used, and the other is HD DVD (it will be called HD hereinafter) having a thickness of 0.6 mm where the objective lens having a NA 0.65 -0.67 is used. A high density optical disc player/recorder capable of recording/reproducing both high density discs will be necessary based on an assumption that these two high density discs based on these two industrial standards will become popular in a market in future.

It is not enough for value of an optical disc player/recorder to be able to record/reproduce information onto/from only a high density disc. Taking account that DVDs and CDs (compact discs) on which various kinds of information is recorded are on a marketplace, it is not enough for value of the optical disc player/recorder to be able to record/reproduce information onto/from only a high density optical disc. In order to raise a product value, it is necessary for an optical disc player/recorder to record/reproduce information not only onto/from a high density disc but also a DVD and a CD which users posses. From these backgrounds, an optical pickup for an optical disc player/recorder for high density optical discs is required to be able to appropriately record/reproduce information onto/from a high density optical disc, DVD and CD.

Japanese Patent Application Open to Public No H09-179020 and Japanese Patent Application Open to Public No H09-120027 disclose an objective lens having two focal points capable of compatibly recording/reproducing information onto/from two kinds of optical discs having different thicknesses of protective layers with a single wavelength from a light source. The objective lens having two focal points is designed to record/reproduce information onto/from optical discs having different thicknesses of protective layers by separating incident light beams to form two focal points by a diffraction structure provided on the surface of a lens. European Patent Application Publication No. EP-1304689 discloses an optical pickup apparatus including an objective lens having a phase structure as a diffraction structure capable of being used for a high density optical disc, a conventional DVD and CD.

However, since the objective lens having two focal points described above is designed to record/reproduce information onto/from optical discs such as DVD having a NA of 0.6 and CD (Compact Disc) having a NA of 0.45. Accordingly, the objective lens having two focal points is not capable of recording/reproducing information onto/from four kinds of optical discs including BD and HD having large NA values.

Since the magnification differences of the objective optical system disclosed in EP-1304689 when recording/reproducing information onto/from each optical disc are so large that it is difficult to use common optical parts, such as a light beam source module having plural kinds of light beam sources integrated into one package in an optical pickup apparatus, other than an objective optical system. And there have been problems that simplification of an optical pickup and realization of a low cost optical pickup cannot be realized. Particularly, since the magnification difference when recording/reproducing information onto/from a CD is large, a problem that comma aberration when the objective lens is controlled under a tracking servo system becomes large.

**SUMMARY OF THE INVENTION**

The purpose of the present invention is to provide an optical pickup apparatus having an objective optical element capable of recording and/or reproducing information onto/from four kinds of discs having different recording densities, such as two types of high density optical discs of different industrial standards having different protective layers, DVD and CD based on the problems described above.

In this specification, optical discs, onto or from which require a blue-violet semiconductor laser diode or a blue-violet SHG laser to record/reproduce information is called a high density optical disc. The high density optical disc includes an optical disc, for example, BD which needs an objective optical system having a NA of 0.85 to record/ reproduce information onto/from the optical disc and the thickness of the protective layer of the optical disc is substantially equal to 0.1 mm, and an optical discs, for example, HD which needs an objective optical system having NA of 0.65 - 0.67 to record/reproduce information onto/from the optical disc and the thickness of the protective layer of the optical disc is substantially equal to 0.6 mm. Other than an optical disc having a protective layer on a recording surface, an optical disc having a protective film having a thickness of several nm to several tens nm or an optical disc having no protective layer or no protective film on the recording surface are also included in the high density optical disc. In this specification, the high density optical disc includes an optical-magnetic disc which requires a blue-violet semiconductor laser diode or a blue-violet SHG laser for recording/reproducing information onto/from the high density optical disc as a light beam source.

Further, in this specification, the phrase that "thickness of protective layer is the same" means that thickness of protective layer of HD DVD being a successor of DVD, and that of DVD are within a rage of thickness respectively defined by the HD DVD standard which has high compatibility with the DVD standard and the DVD standard, and protective layer thickness of DVD, which include the difference between the thickness of DVD and the thickness of HD DVD.

In accordance with one aspect of the present invention, an optical pickup apparatus for recording and or reproducing information onto or from a first optical information recording medium having a first protective layer with a thickness of t1 and second optical information recording medium having a second protective layer with a thickness of t2, where $t1 \neq t2$, by using first light beams having a wavelength $\lambda1$, the optical pickup apparatus comprising, a first light source for emitting first light beams having the wavelength of $\lambda1$, a first objective optical element, and a second objective optical element, wherein when recording and or reproducing the information onto or from the first optical information recording medium, one of the first objective optical lens and the second objective optical lens, which are independently provided in separate bodies, is used to condense the first light beams onto a first information recording surface through the first protective layer, and

when recording and or reproducing the information onto or from the second optical information recording medium, the other one of the first objective optical lens and the second objective optical lens, is used to condense the first light beams onto a second information recording surface through the second protective layer, wherein the first protective layer having thickness of t1 and the second protective layer having thickness of t2 satisfy a following formula,

$$2.5 < t2 / t1.$$

In accordance with another aspect of the present invention, an optical pickup apparatus for recording and or reproducing information onto or from a first optical information recording medium having a first protective layer with a thickness of t1 and second optical information recording medium having a second protective layer with a thickness of t2, where $t1 \# t2$, and a third optical information recording medium having a third protective layer with a thickness of t3 having a third recording density which is different from a first recording density of the first optical information recording medium and a second recording density of the second optical information recording medium, by using at least first light beams having a wavelength $\lambda1$ and second light beams having a wavelength $\lambda2$, where $\lambda1 \neq \lambda2$, the optical pickup apparatus comprising, a first light source for emitting first light beams having the wavelength of $\lambda1$, a second light source for emitting second light beams having the wavelength $\lambda2$;

a first objective optical element, and a second objective optical element, wherein when recording and or reproducing the information onto or from the first optical information recording medium, one of the first objective optical lens and the second objective optical lens, which are independently provided in a separate body, is used to condense the first light beams onto a first information recording surface through the first protective layer,

when recording and or reproducing the information onto or from the second optical information recording medium, the other one of the first objective optical lens and the second objective optical lens, is used to condense the first light beams onto a second information recording surface through the second protective layer, and

when recording and or reproducing the information onto or from the third optical information recording medium, one of the first objective optical lens and the second objective optical lens is used to condense the second light beams onto a third information recording surface through the third protective layer,

wherein the first protective layer having thickness of t1 and the second protective layer having thickness of t2 satisfy a following formula,

$$2.5 < t2 / t1.$$

In accordance with another aspect of the present invention, an optical pickup apparatus for recording and or reproducing information onto or from a first optical information recording medium having a first protective layer with a thickness of t1 and second optical information recording medium having a second protective layer with a thickness of t2, where t1 # t2, a third optical information recording medium having a third protective layer with a thickness of t3 having a third recording density which is different from a first recording density of the first optical information recording medium and a second recording density of the second optical information recording medium, and a fourth optical recording media having a fourth protective layer with a thickness of t4, where t4 ≠ t1, t4 ≠ t2, by using at least first light beams having a wavelength λ1, second light beams having a wavelength λ2, where λ1 ≠ λ2 and third light beams having a wavelength λ3, where λ1 ≠ λ3 and λ2 ≠ λ3, the optical pickup apparatus comprising:

a first light source for emitting first light beams having the wavelength of λ1;
a second light source for emitting second light beams having the wavelength λ2;
a third light source for emitting third light beams having the wavelength λ3;
a first objective optical element; and
a second objective optical element;

wherein when recording and or reproducing the information onto or form the first optical information recording medium, one of the first objective optical lens and the second objective optical lens, which are independently provided in separate bodies, is used to condense the first light beams onto a first information recording surface through the first protective layer,

when recording and or reproducing the information onto or from the second optical information recording medium, the other one of the first objective optical lens and the second objective optical lens, is used to condense the first light beams onto a second information recording surface through the second protective layer,

when recording and or reproducing the information onto or from the third optical information recording medium, one of the first objective optical lens and the second objective optical lens is used to condense the second light beams onto a third information recording surface through the third protective layer, and

when recording and or reproducing the information onto or from the fourth optical information recording medium, one of the first objective optical lens and the second objective optical lens is used to condense the third light beams onto a fourth information recording surface through the fourth protective layer,

wherein the first protective layer having thickness of t1 and the second protective layer having thickness of t2 satisfy a following formula,

$$2.5 < t2 / t1.$$

In accordance with another aspect of the present invention, an optical pickup apparatus for recording and or reproducing information onto or from a first optical information recording medium having a first protective layer with a thickness of t1 and a second optical information recording medium having a second protective layer with a thickness of t2, where t1 ≠ t2, a third optical information recording medium having a third protective layer with a thickness of t3 having a third recording density which is different from a first recording density of the first optical information recording medium and a second recording density of the second optical information recording medium, and a fourth optical recording media having a fourth protective layer with a thickness of t4, where t4 ≠ t1, t4 ≠ t2, by using at least first light beams having a wavelength λ1, where 400 nm ≤ λ1 ≤ 420 nm, second light beams having a wavelength λ2, where 640 nm ≤ λ2 ≤ 670 nm and third light beams having a wavelength λ3, where 780 nm ≤ λ3 ≤ 800 nm, the optical pickup apparatus comprises, a first light source for emitting first light beams having the wavelength of λ1, a second light source for emitting second light beams having the wavelength λ2, a third light source for emitting third light beams having the wavelength λ3, a first objective optical element; and a second objective optical element,

wherein when recording and or reproducing the information onto or from the first optical information recording medium, one of the first objective optical lens and the second objective optical lens, which are independently provided in separate bodies, is used to condense the first light beams onto a first information recording surface through the first protective layer, when recording and or reproducing the information onto or from the second optical information recording medium, the other one of the first objective optical lens and the second objective optical lens, is used to condense the first light beams onto a second information recording surface through the second protective layer, when recording and or reproducing the information onto or from the third optical information recording medium, one of the first objective optical lens and the second objective optical lens is used to condense the second light beams onto a third information recording surface through the third protective layer, and when recording and or reproducing the information onto or from the fourth optical information recording medium, one of the first objective optical lens and the second objective optical lens is used to condense the third light beams onto a fourth information recording surface through the fourth protective layer, wherein the first protective layer having thickness of t1 and the second protective layer having thickness of t2 satisfy a following formula,

$$2.5 < t2 / t1.$$

wherein the second objective optical lens comprises a first area through which a center light beam portion of the first, the second and the third light beams including an optical axis of the second objective optical lens pass, and a second area through which optical beams of an outer side of the center light beam portion pass,

to condense the first light beams passing through the first area and the second area onto or from the second optical information recording medium, when recording and or reproducing information onto or from the second optical information recording medium,

to condense the second light beams passing through the first area and the second area onto or from the third optical information recording medium, when recording and or reproducing information onto or from the third optical information recording medium, and

to condense the third light beams passing through the first area onto or from the fourth optical information recording medium, when recording and or reproducing information onto or from the fourth optical information recording medium.

When recording/reproducing information onto/from the first optical information recording medium and the second optical information recording medium which have different protective layers with a single objective optical element, correcting a spherical aberration to one optical information recording medium makes a spherical aberration against another optical information recording medium based on the differences of these protective layers. For example, when correcting the spherical aberration against one optical information recording medium, the third order spherical aberration W40 of another optical information recording medium is calculated as following.

$$W40 = \{\delta t \, (n_\lambda{}^2 - 1) / (8 \, n_\lambda{}^2)\} \cdot NA^4 \qquad (1)$$

where, $\delta t$ denotes an protective layer difference of optical information recording media, $n_\lambda$ denotes a refractive index of the optical information recording medium at wavelength $\lambda$. NA denotes a numerical aperture.

When the protective layer difference between two types of optical information recording medium is large, the spherical aberration becomes large according to formula shown above, which will be a problem. Conventionally, in order to solve the problem, using diffraction with an objective optical element and/or adjusting the conjugate distance correct the spherical aberration difference caused by the difference of protective layers.

When recording/reproducing information onto/from the first optical information recording medium and the second optical information recording medium by using a single objective optical element, in a past, diffraction on the objective optical element and/or adjusting a conjugate distance corrected the spherical aberration caused by the protective layer difference. However, when recording/reproducing information onto/from the first optical information recording medium and the second optical information recording medium and passing the same light beams having the same wavelength in the same diffractive structure, it is impossible to raise the diffraction efficiency of both media at the same time. Accordingly, one of the diffraction efficiency of one of the media is higher than that of the other medium. For example, when balancing the diffraction efficiency by using two diffraction orders, since it is impossible to raise efficiency, it causes a problem of lacking of light amount, which is not preferable. When recording/reproducing information onto/from each optical information recording medium by correcting spherical aberration caused by the protective layer difference, and a protective layer thickness difference of two types of optical information recording apparatus is large as shown in formula (1), a conjugate distance of the objective optical element required to secure a working distance (it will be called WD hereinafter) which is necessary to record/reproduce information onto/from the optical information recording medium having a thicker protective layer, becomes short. Accordingly, correction of a comma aberration caused by the lens shift of an objective optical element in a tracking direction becomes difficult. Consequently, in the present invention, an objective optical element dedicated for the first optical information recording medium and an objective optical element dedicated for the second optical information recording medium are provided in different bodies so that it becomes possible to design the optimum objective optical element capable of recording/reproducing information onto/from each optical information recording medium, even though the thickness of the protective layers of respective discs are different each other.

It becomes possible to record/reproduce information onto/from three kinds of optical information recording media by using the optical pickup apparatus of the present invention by record/reproduce information onto/from a third optical information recording medium having the same thickness of the second protective layer t2 and a different recording density from the second optical information recording medium by irradiating the second light beams having a second wavelength of λ2 being longer than the first wavelength of λ1, which is emitted from the light source, onto the third optical information recording medium. For example, assuming that t1 = 0.085 - 0.1 mm, λ1 = 400 - 420 nm, t2 = 0.6 mm and λ2 = 640 - 670 nm, the optical pickup apparatus of the present invention will be applied to not only BD and HD but also DVD as well and the specification can be improved.

According to the optical pickup apparatus of the present invention, three kinds of optical information recording medium can be recorded/reproduced by recording/reproducing information onto/from a fourth optical information recording medium having the third protective layer thickness t3 (t3 # t1, t3 # t2) by using a third light beams having a wavelength of λ3 which is longer than the second wavelength λ2. For example, assuming that t3 = 1.2 mm, λ3 = 780 - 800 nm, then the optical pickup apparatus can record/reproduce information onto/from not only BD and HD but also CD. Further, with regard to reproduction of the fourth optical information recording medium, a configuration using a wavelength λ2 is also possible. Further, it becomes possible to provide an optical pickup having compatibility across four kinds of optical information recording medium, capable of recording/reproducing information, by combing the first objective optical element and the second objective optical element so that the optical pickup apparatus can record/reproduce information onto the fourth optical information recording medium in addition to the first - third optical information recording medium.

It is preferable that when recording/reproducing information onto/from three kinds of optical information recording medium or four kinds of optical information recording medium, at least one of the two objective optical elements is arranged to record/reproduce information onto/from two kinds of optical information recording media or three kinds of optical information recording media. It is also preferable that the objective optical element has a phase structure thereon to have compatibility over the optical information recording medium.

The phase structure formed on an optical surface of the objective optical element is a structure to correct chromatic aberration caused by the difference between the first wavelength λ1 and the second wavelength λ2 and/or the spherical aberration caused by the difference of the protective layers of the first optical information recording medium and the second optical information recording medium. The chromatic aberration described above is a difference of paraxial image point locations and/or spherical aberration caused by the difference of wavelengths.

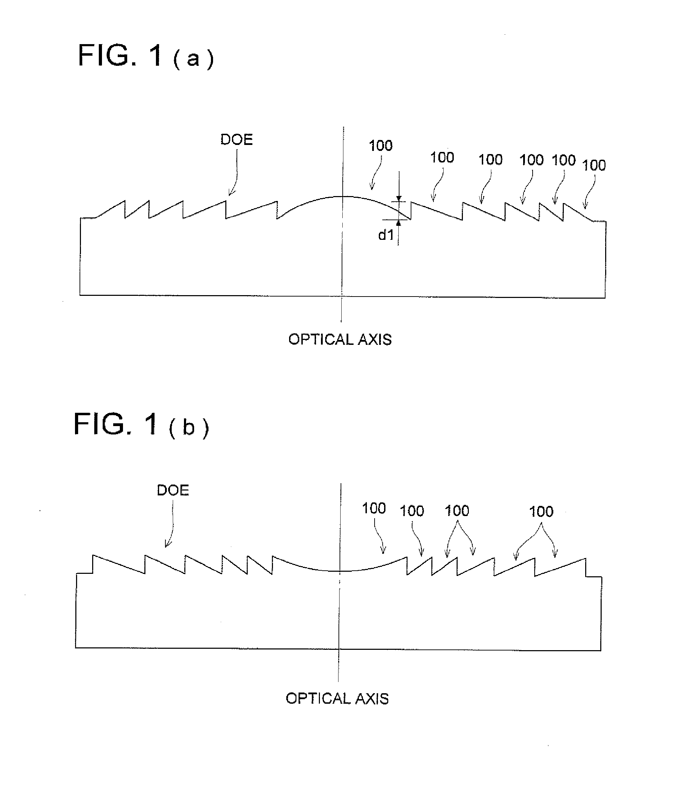

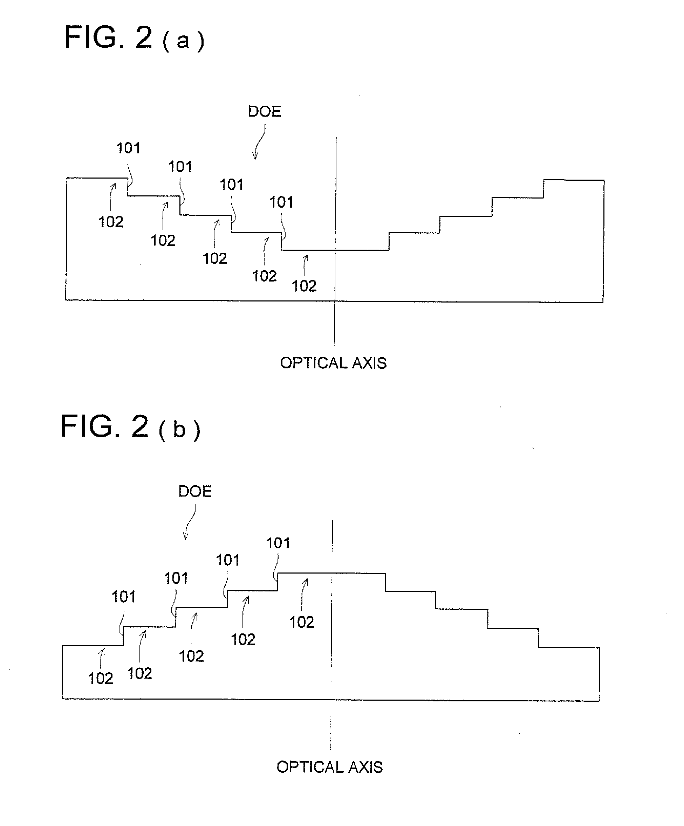

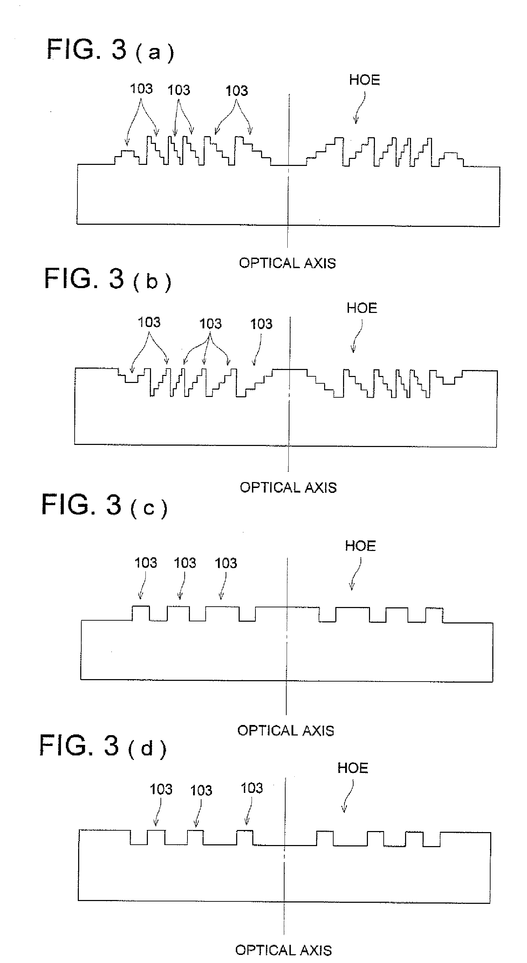

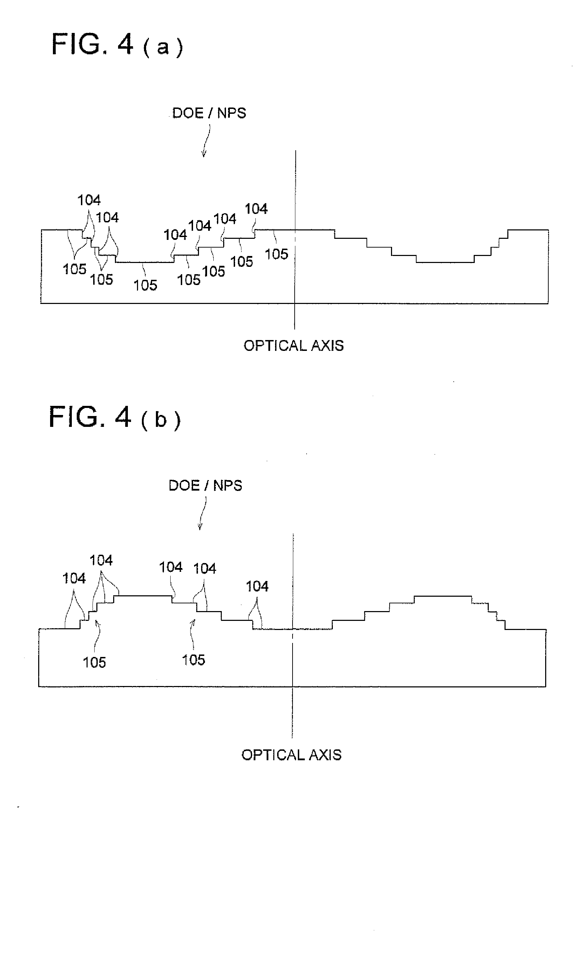

The phase structure described above may be a diffraction structure or an optical path giving structure. As the diffraction structure, there are several kinds of structure are available as shown in Figs. 1 - 4 described below. Fig. 1 schematically shows a structure having plural ring zones 100 having a cross section including the optical axis being shaped in a saw tooth. Fig. 2 schematically shows a structure having stepping structure 101 including plural zone 102 in an effective aperture having a cross section including an optical axis being shaped in a step shape. Fig. 3 schematically shows a structure having plural zone 103 including a stepping structure therein. Fig. 4 schematically shows a structure having plural zone 105 including stepping structure 104 in an effective aperture, in which the direction of stepping structure 104 is changed. With regard to the optical path giving structure, as schematically shown in Fig. 4, there is a structure having plural zone 105 including stepping structure 104 in an effective aperture, in which the direction of stepping structure 104 is changed. Consequently, the structure shown in Fig. 4, may be a diffraction structure or a optical path giving structure. Figs. 1 -4 schematically shows examples in which each phase structure is formed on a plane surface. However each phase structure may be formed on an aspherical surface.

In this specification, an objective optical element is a optical system including at least a beam-condensing element having a function to condense light beams onto each information recording surface of optical discs having different recording density, the objective optical element being provided in an optical pickup apparatus, which is positioned opposed to an optical disc. The objective optical system may be structured merely a beam-condensing element. In this case, the phase structure is formed on the optical surface of the beam-condensing element.

Further, in the case that the optical element performing a tracking and a focusing based on an actuator together with the beam-condensing element described above, the optical system structured by the optical element and the beam-condensing element becomes a objective optical element. In the case that the objective optical element is structured by plural optical elements, a phase structure may be formed in an optical surface of the beam-condensing element. It is preferable that the phase structure is formed on the optical surface of an optical element other than the beam-condensing element in order to decrease the affect of beam eclipse of a stepping portion of the phase structure.

Further, the beam-condensing element described above may be a plastic lens or a glass lens. In the case of the beam-condensing element being a plastic lens, it is preferable that a plastic material of cyclic olefin is used. It is preferable that among the cyclic olefin, there is used a plastic material having a refractive index $N_{405}$ being within a rage of 1.54 - 1.60 at a temperature of 25°C, and a rate of change of the refractive index $dN_{405}/dT$ ($°C^{-1}$) of a wavelength 405 nm being -10 x $10^{-5}$ - (- 8) x $10^{-5}$ in temperature range from - 5°C to 70°C.

When the beam-condensing element is a glass lens, the life of die can be prolonged by using glass material having a glass transition temperature Tg of 400°C, since the glass material is deformed at relatively low temperature. As a glass material having low transition temperature, for example, there are K-PG325 and K-PG 375, both are product names of Sumita Optical Glass Corporation.

Since the specific gravity of glass is in general larger than that of a plastic lens, if the beam-condensing element is a glass lens, the weight of the objective optical lens becomes heavy and the workload on an actuator to drive the objective optical system becomes heavy. Accordingly, it is preferable that when the beam-condensing element is a glass lens, low specific gravity glass is used. It is preferable that the specific gravity of the glass material is not more than 3.0, preferably not more than 2.8.

As the material of the beam-condensing element, material in which particles having a diameter of not more than 30 nm are dispersed may be used. The temperature dependency of refractive index can be cancelled by mixing the inorganic material having a characteristic that the refractive index goes up when temperature goes up into plastic material having characteristic that the refractive index goes down when temperature goes up. Consequently, optical material (it will be called athermal plastic hereinafter) having a low rate of change for a refractive index against temperature change can be obtained while maintaining the moldablility of plastic material.

A temperature characteristic of a beam-condensing element will be explained. The rate of change of refractive index against temperature change A will be expressed by a following formula based on the formula of Lorentz by deriving refractive index n by temperature T.

$$A = \frac{\left(n^2 + 2\right)\left(n^2 - 1\right)}{6n \times \left[(-3\alpha) + \frac{1}{[R]} \times \frac{\partial [R]}{\partial T}\right]}$$

Where n denotes a refractive index of the beam-condensing element against a wavelength of a laser beam source; $\alpha$ denotes a line expansion coefficient; and [R] denotes a molecular refractive power.

In the case of general plastic material, contribution of the second term is small, since comparing with the first term, the second term may be ignored. For example, in the case of acrylic resin (PMMA), line expansion coefficient $\alpha$ is $7 \times 10^{-5}$. By substituting this to the formula shown above, $A = 12 \times 10^{-5}$, which is generally equal to a measurement result. In the case of athermal resin, dispersing it into plastic material of particle having a diameter of not more than 30 nm allows the contribution of the second term in the formula shown above to becomes large to cancel the effect of the change of the line expansion coefficient of the first term. It is preferable to suppress the rate of change of refractive index against temperature which has been around - $12 \times 10^{-5}$ to $10 \times 10^{-5}$ in an absolute value, preferably $8 \times 10^{-5}$ and further preferably $6 \times 10^{-5}$ from the viewpoint of reducing the spherical aberration change based on temperature change of the beam-condensing element.

It is possible to eliminate the dependency of a refractive change against a temperature change by dispersing fine niobium oxide particles ($Nb_2O_5$) in acrylic resin (PMMA). Plastic material as ground material 80 and niobium oxide 20 in volume ratio are uniformly mixed. There is a problem that fine particles tend to coagulate. However, technology to disperse particles by giving electrons onto the surface of the particles is known. Accordingly, it becomes possible to cause a necessary dispersion state.

This volume ratio can be adjusted to control the rate of the refractive change against temperature change. Also it is possible to blend and disperse plural kinds of nanometer-sized inorganic.

In the example described above, ground material 80 and niobium oxide 20 in volume ratio are uniformly mixed. The vole ratio can be adjusted between 90 : 10 and 60 : 40. If volume ratio is smaller than 90 : 10, then the effect to suppress the refractive change becomes small and if the volume ratio is over 60 : 40, then the formability of athermal resin becomes problematic.

It is preferable that the fine particle is inorganic material, and oxide material, which cannot be further oxidized is more preferable. Since inorganic material suppresses reaction against plastic material being polymer organic compound, and oxide prevents the transmission efficiency degradation and wavefront aberration caused by long time irradiation of blue-violet laser. Particularly, a severe condition that blue-violet laser irradiates a beam-condensing element for a long time, oxidation tends to be proceeded. However if the beam-condensing element is formed by inorganic material, the transmission efficiency degradation and the wavefront aberration can be prevented.

When the diameter of fine particle, which is dispersed into plastic material is large, incident light beams tend to be dispersed and the transmission efficiency of a beam-condensing element goes down. In a high density optical disc, when the transmission efficiency of a beam-condensing element for blue-violet laser is low, it will be a disadvantage from the viewpoint of high speed recording and capability of recording/reproducing information onto/from a multi-layer optical disc, taking account that output power of blue-violet laser used for recording/reproducing information is not high enough. Consequently, it is preferable that the diameter of fine particle dispersed into plastic material is not more than 20 nm, further preferably not more than 10 - 15 nm from the view point of prevention of transmission efficiency of the beam-condensing element.

According to the present invention, it becomes possible to provide an optical pickup apparatus capable of appropriately recording/reproducing information onto/from a high density DVD, a conventional DVD and CD.

## BRIEF DESCRIPTION OF THE DRAWING

Fig. 1 shows an example of a diffraction structure.
Fig. 2 shows an example of a diffraction structure.
Fig. 3 shows an example of a diffraction structure.
Fig. 4 shows a example of phase difference giving structure.
Fig. 5 shows a schematic of optical pickup apparatus PU1 of the first embodiment of the present invention.
Fig. 6 shows a bird's eye view of an objective lens actuator apparatus of the embodiment of the present invention.
Fig. 7 shows a schematic of structure of optical pickup apparatus PU2 of the second embodiment of the present invention.
Fig. 8(a) shows a front view of an objective optical element, Fig. 8(b) shows a side view of the objective optical element and Fig. 8(c) shows a rear view of the objective optical element.
Fig. 9 shows a configuration for guiding light beams to objective optical elements by separating an optical path by a half mirror.
Fig. 10 shows a configuration to guide light beams to objective optical element by moving mirror.

## DETAILED DESCRIPTION OF THE INVENTION

(The first embodiment)

The present invention will be described in detail by referring drawings below. The recording densities ($\rho$1 - $\rho$4) of the first disc - fourth disc are $\rho$4 < $\rho$3 < $\rho$2 < $\rho$1. The magnification factor of objective optical system OBJ1 or OBJ2, when recording/reproducing information onto/from the first optical disc - the fourth optical disc, are the first magnification factor M1 - the fourth magnification factor M4. However, the combination of a wavelength, a thickness of a protective layer, a numerical aperture, a recording density and a magnification factor is not limited to this embodiment.

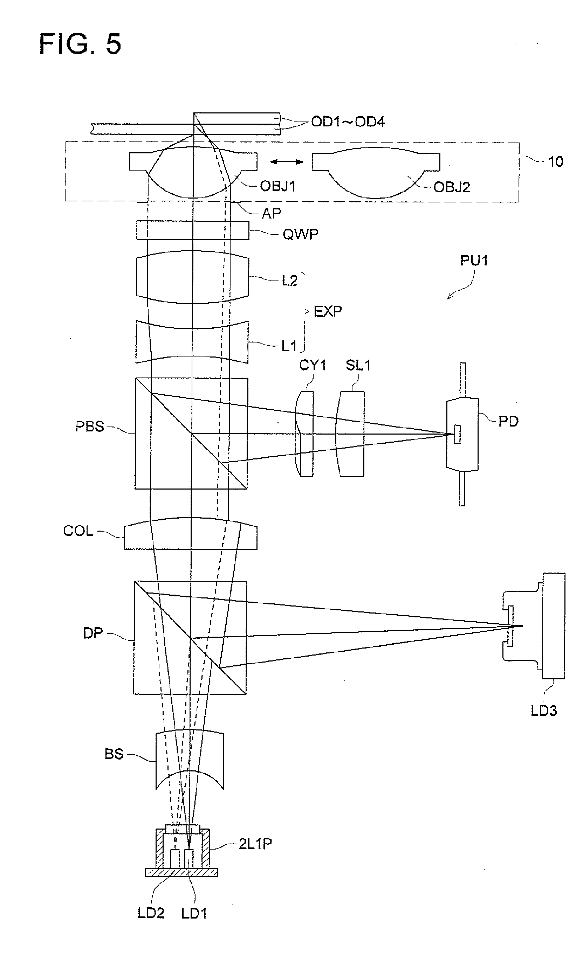

Fig. 5 shows a sectional schematic drawing of an optical pickup of the first embodiment of the present invention capable of recording/reproducing information onto/from a high density optical disc (the first disc or the second disc), a conventional DVD (the third disc) and a CD (the fourth disc).

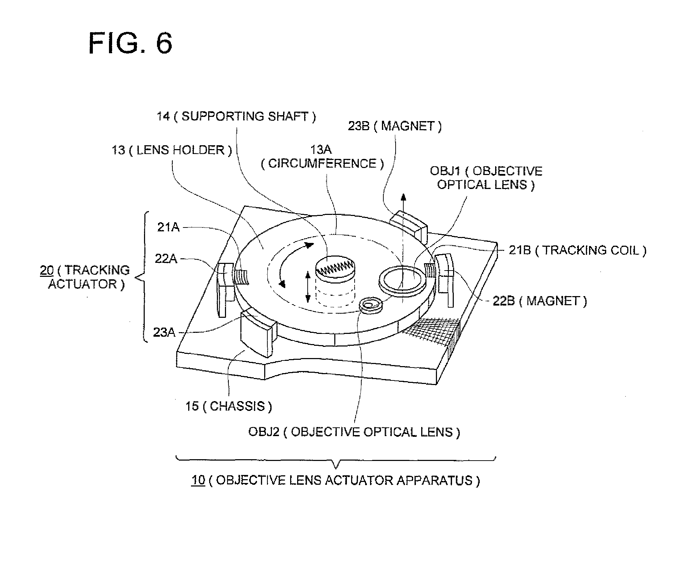

Fig. 6 shows a bird's view of an objective lens actuator apparatus used for the optical pickup apparatus of the embodiment of the invention. The objective lens actuator apparatus will be described. Objective lens actuator apparatus 10 shown in Fig. 6 is provided in the optical pickup apparatus shown in Fig. 5. The objective lens actuator apparatus 10 comprises OBJ1 (the first objective optical element), OBJ2 (the second objective optical element) condensing laser beams from a semiconductor laser diode onto different information recording surfaces of different optical discs, lens holder 13 for holding objective optical elements OBJ1 and OBJ2 on the same circumference 13A, chassis 15 for supporting lens holder 13 so that lens holder 13 can freely rotate around supporting shaft 14 provided the center of circumference 13A and reciprocally moving along the center axis of the rotation, a focusing actuator (not shown) to reciprocally move lens holder 13 along supporting axis 14 and tracking actuator 20 to give lens holder 13 rotating power to rotate each objective lens OBJ1 and OBJ2 for fixing a position. Objective lens actuator apparatus 10 includes an operation control circuit (not shown) for controlling each actuator.

Objective optical element OBJ1 and OBJ2 are provided in a hole formed in lens holder 13 structured in a circular plate, the hole is formed through lens holder 13. Objective optical element OBJ1 and OBJ2 are provided in the same distance from the center of lens holder 13. Lens holder 13 is connected to the top end of supporting shaft 14, which is provided on chassis 15 in the center of lens holder 13 so that lens holder 13 can freely rotates. A focusing actuator (not shown) is provided under supporting shaft 14.

Namely, this focusing actuator comprises an electric magnet solenoid having a permanent magnet provided in a lower end of supporting shaft 14 and a coil provided around the permanent magnet therein. The focusing actuator is designed to adjust a focus distance with a fine pitch by adjusting electric current in the coil to reciprocally moving the supporting shaft 14 and lens holder 13 along the supporting shaft 14 (up and down direction in Fig. 6).

As described above, lens holder 13 is designed to freely swing based on the force of tracking actuator on the center of supporting shaft 14 having an axis parallel to an optical axis. Tracking actuator comprises a pare of tracking coil 21A and 21B provided in the edge of lens holder 13, each of which is positioned in a symmetry across supporting shaft 14, two pares of magnets 22A, 22B, 23A and 23B provide adjacent the edge of lens holder 13, each of which is positioned in a symmetry across supporting shaft 14 on chassis 15.

Positions of magnet 22A and 22B is arranged so that when tracking coils 21A and 21B opposes to a paired magnets 22A and 22B, objective optical element OBJ1 is positioned on the optical path of laser beams and positions of magnet 23A and 23B is arranged so that when tracking coils 21A and 21B opposes to a pared magnets 23A and 23B, objective optical element OBJ2 is positioned on the optical path of laser beams.

A stopper (not shown) to limit a swinging range is provided in the lens holder 13 so that tracking coils 21A and 21B do not oppose to magnets 22B or 23B, and magnets 22A or 23A respectively.

Tracking actuator 20 is arranged so that the tangent line direction of outer circumference of lens holder 13 formed in circular shape crosses with the tangential line direction of a track of the optical disc in a right angle. Tracking actuator corrects a deviation of an irradiating position of laser beams to the track by forcing lens holder 13 to swing with a fine pitch. Accordingly, it is necessary that tracking coils 21A and 21B swing lens holder 13 with a fine pitch while tracking coils 21A and 21B respectively oppose to magnets 22A and 22B.

In order to perform tracking operation, respective tracking coils 21A and 21B have a piece of iron therein. An operation control circuit is designed to control electric current in each tracking coil 21A and 21B so that tacking coils 21A and 21B generate repulsive force against the each magnet while the each magnet pulls the piece of iron.

An optical pickup apparatus of the invention will be described blow. When recording/reproducing information onto/from information surfaces of four kinds of optical discs OD1 - OD4, lens holder 13 of objective lens actuator 10 is rotated to move objective optical lenses OBJ1 or OBJ2 in a optical path as shown in Fig. 5. In the embodiment of the invention, the first semiconductor laser diode LD1 and the second semiconductor laser diode LD2 are placed on the same printed circuit board, which configures a single unit called two laser diodes in one package.

[When recording/reproducing information onto/from the first optical disc OD1 or the second optical disc OD2]

A beam shape of laser beams emitted from the first semiconductor laser diode LD1 (wavelength $\lambda1 = 400$ nm - 420 nm) is corrected by beam shaper BS. The laser beams are shaped in parallel laser beams by collimator lens COL after passing through dichroic prism DP and then pass through polarization beam splitter PBS. And the laser beams are guided to beam expander EXP having optical elements L1 and L2. Beam expander EXP in which at least one of optical elements L1 or L2 (preferably L1 in this embodiment) is arranged to move in an optical axis direction, corrects or expands the parallel light beams to correct chromatic aberration and spherical aberration. Particularly, a diffraction structure is provided on the surface of the other optical element L2 to correct chromatic aberration of the laser beams emitted from the first laser diode LD1. The diffraction structure for correcting chromatic aberration may be provided not only in optical element L2 but also in other optical elements, for example, collimator lens COL, etc. A chromatic aberration correcting function can be achieved not only by the diffraction structure but also by a phase structure and/or multi-level, etc.

As described above, the chromatic aberration and the spherical aberration can be corrected by providing beam expander EXP. Further, when a high density DVD has two information recording surfaces therein, selection of the information recording surface can be conducted by moving optical element L1 in an optical axis direction. A chromatic aberration correction optical element and a spherical aberration correction optical element can be provided not only in beam expander EXP but also in objective optical element OBJ1 or OBJ2.

In Fig. 5, laser beams passed through beam expander EXP pass through quarter wave plate QWP and diaphragm AP guided to objective optical elements OBJ1 or OBJ2 which is formed by merely a refraction surface. The laser beams pass through objective optical elements OBJ1 or OBJ2 is collected into a focal spot on an information recording surface of the first optical disc OD1 through a protective layer (thickness t1 = 0.085 mm - 0.1 mm) or an information recording surface of the second optical disc OD2 through a protective layer (thickness t1 = 0.55 mm - 0.65 mm).

Laser beams reflected by an information pit on an information recording surface again pass through objective optical elements OBJ1 or OBJ2, diaphragm AP, quarter wave plate QWP and beam expander EXP. Then the laser beams are reflected by polarized beam splitter PBS and cylindrical lens CY1 gives astigmatism to the laser beams. Then the laser beams reach to photo-detector PD after passing through sensor lens SL1. Information recorded on the first optical disc OD1 or the second optical disc OD2 is obtained by using the output of photo-detector PD.

Focal point detection and track detection are performed by detecting the change of laser beam amount based on the change of a laser beam spot shape and the change of a laser beam spot location. Based on these detections, a focusing actuator (not shown) and tracking actuator 20 of objective lens actuator mechanism 10 moves objective optical element OBJ1 or objective optical element OBJ2 so that laser beams from the first laser diode LD1 are condensed on the information recording surface of the first optical disc OD1 or the second optical disc OD2.

[When recording/reproducing information onto/from the third optical disc OD3]

In Fig. 5, the beam shape of laser beams emitted from the second semiconductor laser diode LD2 as the second light source (wavelength $\lambda 2$ = 640 nm - 670 nm) is corrected by beam splitter BS. The laser beams pass through dichroic prism DP and are shaped into parallel laser beams by collimator lens. Then the laser beams pass through polarized beam splitter PBS and enter into beam expander EXP having optical elements L1 and L2.

In Fig. 5, laser beams passed through beam expander EXP pass through quarter wave plate QWP and diaphragm AP guided to objective optical elements OBJ1 or OBJ2 which is formed by merely a refraction surface. The laser beams passing through objective optical elements OBJ1 or OBJ2 is collected into a focal spot on an information recording surface of the third optical disc OD3 through a protective layer (thickness t3 = 0.55 mm - 0.65 mm).

Laser beams reflected by an information pit on an information recording surface again pass through objective optical elements OBJ1 or OBJ2, diaphragm AP, quarter wave plate QWP and beam expander EXP. Then the laser beams are reflected by polarized beam splitter PBS and cylindrical lens CY1 gives astigmatism to the laser beams. Then the laser beams reach to photo-detector PD after passing through sensor lens SL1. Information recorded on the third optical disc OD3 is obtained by using the output of photo-detector PD.

Focal point detection and track detection are performed by detecting the change of laser beam amount based on the change of a laser beam spot shape and the change of a laser beam spot location. Based on this detection, a focusing actuator (not shown) and tracking actuator 20 of objective lens actuator mechanism 10 moves objective optical element OBJ1 or objective optical element OBJ2 so that laser beams from the second laser diode LD2 are condensed on the information recording surface of the third optical disc OD3.

[When recording/reproducing information onto/from the fourth optical disc OD4]

The beam shape of laser beams emitted from the third semiconductor laser diode LD3 as the third light source (wavelength $\lambda 3$ = 750 nm - 820 nm) is corrected by beam splitter BS. The laser beams pass through dichroic prism DP and are shaped into parallel laser beams by collimator lens. Then the laser beams pass through polarized beam splitter PBS and enter into beam expander EXP having optical elements L1 and L2.

In Fig. 5, laser beams passed through beam expander EXP pass through quarter wave plate QWP and diaphragm AP guided to objective optical elements OBJ1 or OBJ2 which is formed by merely a refraction surface. The laser beams pass through objective optical elements OBJ1 or OBJ2 is collected into a focal spot on an information recording surface of the fourth optical disc OD4 through a protective layer (thickness t4 = 1.2 mm).

Laser beams reflected by an information pit on an information recording surface again pass through objective optical elements OBJ1 or OBJ2, diaphragm AP, quarter wave plate QWP and beam expander EXP. Then the laser beams are reflected by polarized beam splitter PBS and cylindrical lens CY1 gives astigmatism to the laser beams. Then the laser beams reach to photo-detector PD after passing through sensor lens SL1. Information recorded on the forth optical disc OD4 is obtained by using the output of photo-detector PD.

Focal point detection and track detection are performed by detecting the change of laser beam amount based on the change of a laser beam spot shape and the change of a laser beam spot location. Based on this detection, a focusing actuator (not shown) and tracking actuator 20 of objective lens actuator mechanism 10 moves objective optical element OBJ1 or objective optical element OBJ2 so that laser beams from the third laser diode LD3 are condensed on the information recording surface of the fourth optical disc OD4.

(Second embodiment)

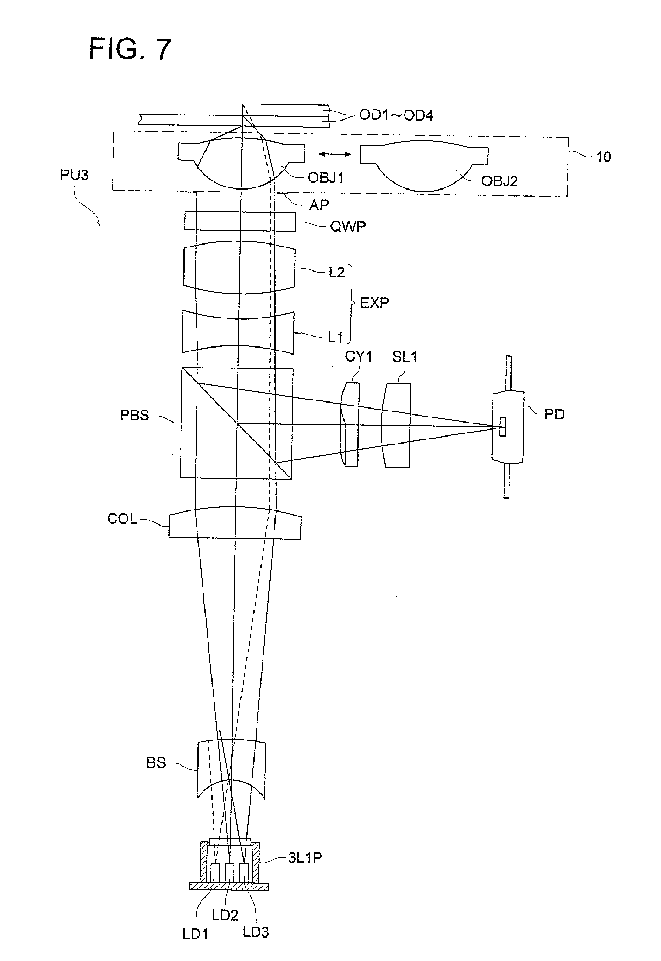

Fig. 7 shows a schematic diagram of an optical pickup apparatus of a second embodiment of the present invention. In this embodiment, the first, second and third semiconductor laser diodes are attached on the same board, which is a single unit called three laser diodes in one package 3LIP.

A beam shape of laser beams emitted from the first semiconductor laser diode LD1, the second semiconductor laser diode LD2 and the third semiconductor laser diode LD3 is corrected by beam shaper BS. The laser beams are shaped in parallel laser beams by collimator lens COL and then pass through polarization beam splitter PBS. And the laser beams are guided to beam expander EXP having optical elements L1 and L2.

Laser beams passed through beam expander EXP pass through quarter wave plate QWP and diaphragm AP guided to objective optical elements OBJ1 or OBJ2 which is formed by merely a refraction surface. The laser beams pass through objective optical elements OBJ1 or OBJ2 is collected into a focal spot on an information recording surface of any one of the first - fourth optical discs OC1 - OD4 through the protective layer.

Laser beams reflected by an information pit on an information recording surface again pass through objective optical elements OBJ1 or OBJ2, diaphragm AP, quarter wave plate QWP and beam expander EXP. Then the laser beams are reflected by polarized beam splitter PBS and cylindrical lens CY1 gives astigmatism to the laser beams.

Then the laser beams reach to photo-detector PD after passing through sensor lens SL1. Information recorded on any one of the first, second, or fourth optical disc OD1, OD2, OD3 or OD4 is obtained by using the output of photo-detector PD.

Focal point detection and track detection are performed by detecting the change of laser beam amount based on the change of a laser beam spot shape and the change of a laser beam spot location. Based on this detection, a focusing actuator (not shown) and tracking actuator 20 of objective lens actuator mechanism 10 moves objective optical element OBJ1 or objective optical element OBJ2 so that laser beams from the third laser diode LD3 are condensed on the information recording surface of any one of the first, second, or fourth optical disc OD1, OD2, OD3 or OD4.

In the embodiment described above, either of objective optical lenses is mechanically placed in an optical path by moving lens holder 13 on which two objective optical lenses BJ1 and OBJ2 are fixed. However the present invention is not limited to this embodiment. For example, following variations are available. The first variation has a moving mirror or a movable prism to change an optical path to either of the objective optical elements corresponding to the optical disc to be used while objective optical elements OBJ1 and OBJ2 are fixed. "Fixed" in the above sentence means that Objective optical elements OBJ1 and OBJ2 moves in the optical axis direction for focusing, however they do not move in the direction being vertical to the optical axis. Another variation is that a polarized beam splitter, etc. having a polarizing effect is used to change an optical path without using a moving portion. Another variation is that two independent optical systems having an optical path from three light sources to the two objective optical elements are provided. Further, it is not necessary that objective optical elements OBJ1 and OBJ2 are respective different bodies. For example, when the objective element is formed by plastic resin, objective elements OBJ1 and OBJ2 are formed in a body in a parallel arrangement.

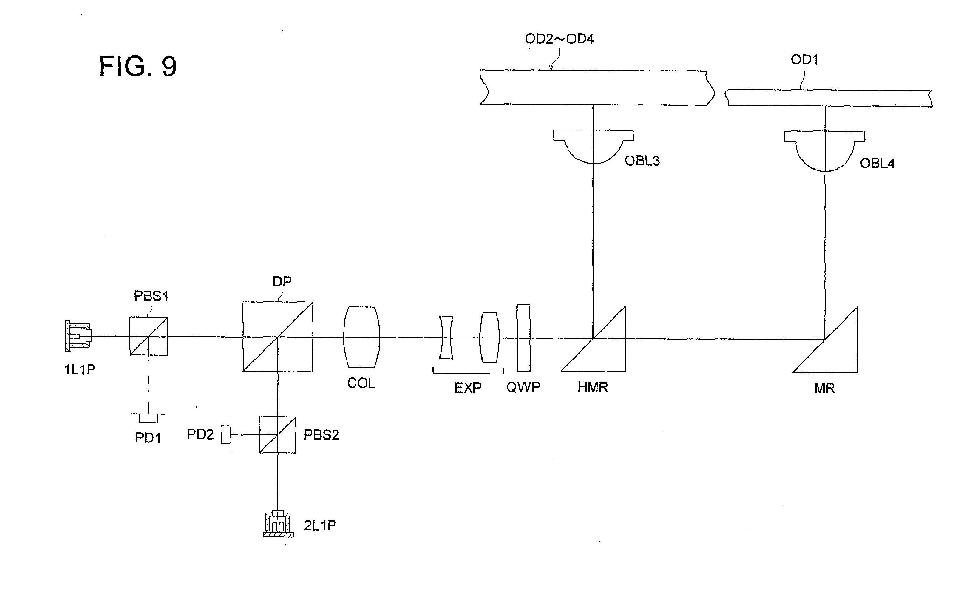

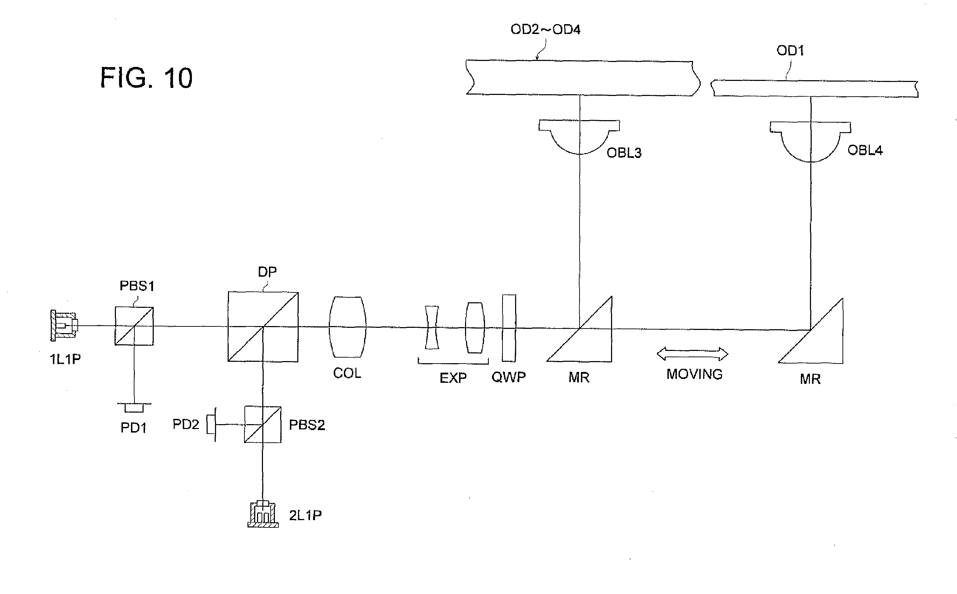

Figs. 9 and 10 show pickup apparatus configurations in which the positions of objective optical elements described above are fixedly deployed. Fig. 9 shows a configuration for recording and or reproducing information onto or from each disc by separating an optical path using half mirror HMR as a beam splitter and guiding optical beams into objective optical elements OBJ3 and OBJ4 which are fixedly deployed so that each optical axis is arranged to be parallel each other. Fig. 10 shows a configuration for recording and or reproducing information onto or from each disc by a movable mirror which moves between the first position where light beams are guided to objective optical element OBJ3 instead of half mirror HMR as a beam splitter shown in Fig. 9 and a second position where light beams are guided to objective optical element OBJ4. Other configurations are the same as configurations shown in Fig. 9.

In Fig. 9, there are provided semiconductor laser L1 as a first light source for BD or HD, semiconductor laser L2 as a second light source for DVD and semiconductor laser L3 as a third light source for CD, which are packaged into one package 2L1F in this embodiment.

[When recording and or reproducing information onto or from the first optical disc OD1 and the second optical disc OD2]

Laser beams emitted from the first semiconductor laser diode LD1 (wavelength $\lambda1$ = 400 nm - 420 nm) are shaped in parallel laser beams by collimator lens COL after passing through dichroic prism DP as a wavelength selection element, then entering into beam expander EXP structured by plural optical elements. The light beams passed through beam expander EXP transmit through quarter wave plate QWP (and aperture AP). A part of the light beams reflected by half mirror HMR and the other pass through half mirror HMR.

Half mirror HMR is arranged to separate almost all incident light beams having wavelength of $\lambda1$ into transmitted light beams and reflected light beams, and to transmit or reflect almost all the incident light beams having wavelength $\lambda2$ and $\lambda3$. (The configuration shown in Fig. 9 is an example of reflection.)

When recording and or reproducing information onto or from the first optical disc OD1, half mirror reflects a part of light beams transmitted through the half mirror to change the direction of the light beams for guiding the light beams into optical objective element OBJ4. The light beams are focused onto the recording surface of the first optical disc OD1 through the protective layer (thickness t1 = 0.085 - 0.1 mm).

When recording and or reproducing information onto or from the second optical disc OD2, a part of the reflected light beams by the half mirror is guided into objective optical element OBJ3. The light beams are focused onto the recording surface of the second optical disc OD2 through the protective layer (thickness t2 = 0.55 - 0.65 mm)

The reflected light beams modulated and reflected by information pits on the information recording surface are guided into photo-detector PD1 after passing back through objective optical element OBJ3 or OBJ4, half mirror HMR, quarter wave plate QWP and beam expander EXP, and reflected by polarized beam splitter PBS1. Since the light beams enters into photo detector PD1, information signals which are recorded onto the first optical disc OD1 and second optical disc OD2 are obtained by using the output signal of photo-detector PD1. Focal point detection and tacking detection are performed by detecting a light beam amount change caused by a shape change and position change of the spot formed on the photo detector PD. Based on this detection described above, a focusing actuator and a tracking actuator (not shown) of an objective lens actuator mechanism moves objective optical elements OBJ3 or OBJ4 as one body so that the light beams emitted from the first semiconductor laser LD1 is focused onto the information recording surface of the first optical disc OD1 and the second optical disc OD2.

[When recording and or reproducing information on the third optical disc OD3]

Laser beams emitted from the second semiconductor laser diode LD2 (wavelength $\lambda 2$ = 640nm - 670 nm) are shaped in parallel laser beams by collimator lens COL after passing through polarized beam splitter PBS2 and reflected by dichroic prism DP as a wavelength selection element, then entering into beam expander EXP.

Light beams transmitted through beam expander EXP pass through quarter wave plate QWP. Half mirror HMR reflects almost all the light beams, which are guided into objective optical element OBJ3. Then the light beams are focused onto the information recording surface of third optical disc OD3 after passing through the protective layer (thickness t3 = 0.55 - 0.65 mm).

The light beams modulated and reflected by information pits on the information recording surface are guided into photo-detector PD2 after passing back through objective optical element OBJ3, half mirror HMR, quarter wave plate QWP, beam expander EXP and collimator COL, then reflected by dichroic prism DP and polarized beam splitter PBS2. Information signal, which is recorded onto the third optical disc OD3 is obtained by using the output signal of photo-detector PD 2. Focal point detection and tacking detection are performed by detecting a light beam amount change caused by a shape change and position change of the spot formed on the photo detector. Based on this detection described above, a focusing actuator and a tracking actuator (not shown) of an objective lens actuator mechanism moves objective optical elements OBJ3 as one body so that the light beams emitted from the second semiconductor laser LD2 is focused onto the information recording surface of the third optical disc OD3.

[When recording and or reproducing information onto or form the fourth optical disc OD4]

Laser beams emitted from the third semiconductor laser diode LD3 (wavelength $\lambda 3$ = 750nm - 820 nm) are shaped in parallel laser beams by collimator lens COL after passing through polarized beam splitter PBS2 and reflected by dichroic prism DP as a wavelength selection element, then entering into beam expander EXP.

Light beams transmitted through beam expander EXP pass through quarter wave plate QWP. Half mirror HMR reflects almost all the light beams, which are guided into objective optical element OBJ3. Then the light beams are focused onto the information recording surface of fourth optical disc OD4 through the protective layer (thickness t3 = 1.2 mm).

The reflected light beams modulated and reflected by information pits on the information recording surface are guided into photo-detector PD2 after passing back through objective optical element OBJ3, half mirror HMR, quarter wave plate QWP, beam expander EXP and collimator COL, then reflected by dichroic prism DP and polarized beam splitter PBS2. Information signal, which is recorded onto the fourth optical disc OD4 is obtained by using the output signal of photo-detector PD 2. Focal point detection and tacking detection are performed by detecting a light beam amount change caused by a shape change and position change of the spot formed on the photo detector. Based on this detection described above, a focusing actuator and a tracking actuator (not shown) of an objective lens actuator mechanism moves objective optical elements OBJ3 as one body so that the light beams emitted from the third semiconductor laser LD3 is focused onto the information recording surface of the fourth optical disc OD4.

Dichroic prism DP has a characteristic to transmits light beams having wavelength $\lambda 1$ and reflects light beams having wavelength $\lambda 2$ and $\lambda 3$.

Further, beam expander EXP comprises plural optical elements and at least one optical element moves in an optical axis direction so as to change (here enlarge) an optical beam diameter of parallel beams from collimator COL. However beam expander EXP may have functions to correct chromatic aberration and spherical aberration as other functions. Chromatic aberration here is aberration caused by wavelength drift and spherical aberration is one of aberration of spherical aberration caused by the differences between the thickness of protective layer of respective optical discs, spherical aberration caused by wavelength drift, and spherical aberration caused by temperature drift.

These aberration corrections are not limited to be performed by the beam expander having plural optical elements. Providing plural step difference structures on at least one of an optical surface may perform these aberration corrections. The step difference structure includes a diffraction structure for decreasing aberration by causing diffraction action in incident light beams, a phase structure for decreasing aberration by causing phase difference, both structures on different optical surfaces, a step difference structure superimposing the diffraction structure and the phase structure on a same optical surface and a step difference structure including small steps therein having a wavelength selectivity. Here, beam expander EXP comprises plural optical element. However, it may be a single optical element.

The step difference structure may be provided not only on beam expander EXP but also other optical elements, such as collimator COL, etc., or objective optical element OBJ3 (OBJ4).

Chromatic aberration and spherical aberration can be corrected by providing the beam expander EXP described above. Further, it becomes possible to select the information recording surface by moving optical element in light beam side when high density DVD has dual layers of information recording surfaces. In Figs. 9 and 10, PD1 and PD2 are separately provided. However, these photo detectors may be integrated into one sensor, which can be commonly used for from the first to the third light beams. If this is the case, it is easily understand that PD2 and PDS2 which are shown in Figs. 9 and 10, become unnecessary.

In Figs. 9 and 10, collimator COL which is commonly used for these wavelengths. However, this collimator COL can be a collimator for two wavelengths for BD and for DVD/CD. Further, in this figure, a half mirror is used to change the direction of light beams to guide them to objective optical elements OBJ3 and OBJ4. This structure is preferable to decrease the number of optical systems, however the structure is not limited to this structure. Namely, the beams splitter used here may be an optical element having a structure to polarize light beams to plural directions, which is capable of guiding incident light beams to each optical element. The beam splitter is not limited to a half mirror which selectively transmits or reflects incident light beams. For example, it may be a structure for separating light beams into a first polarized direction element of incident light beams and a second polarized direction element of different polarized direction element for the first polarized direction element, which is the same as a polarized beam splitter. In this case, in the configuration of an optical system illustrated in Fig. 9, PBS1 is not necessary to be a half mirror.

Fig. 10 illustrates a configuration having two lens system including mirror MR for moving to guide blue-violet laser beams to objective optical element OBJ3 for HD/DVD/CD and to objective optical element OBJ4 for BD, which is the same as Fig. 9.

A concrete example of the embodiment described above will be described below. In the example blow, numerical apertures NA1 = 0.85 - 0.9, NA2 = 0.65 -0.67, NA3 = 0.60 - 0.67 and NA4 = 0.45 - 0.53. Further, HWL is a blaze wavelength of a grating. Power of 10, for example, $2.5 \times 10^{-3}$, will be expressed in 2.5 E - 3, hereinafter.

The optical surface of the objective optical system is formed on an aspheric surface which is defined by formula (2) below when substituting the coefficients shown in Table 1.

$$x(h) = \frac{(h^2/R)}{1 + \sqrt{1 - (1+\kappa)(h/R)^2}} + \sum_{i=0}^{9} A_2 h^{2i}$$

Where X (h) denotes an axis in the optical axis (a laser beam traveling direction is defined as positive direction); K denotes a constant of cone; $A_2$ denotes aspheric constant; and h denotes a height from the optical axis.

Optical path length given to laser beams of each wavelength by the diffraction structure is defined as following formula with substituted coefficient shown in Table 1.

$$\phi(h) = \sum_{i=0}^{5} B_{2i} h^{2i}$$

Where $B_{21}$ is a coefficient of an optical path difference function.

(Embodiment A)

In embodiment A, the first objective optical element is used to record/reproduce onto/from HD (the second optical disc) and DVD(the third optical disc) and the second objective optical element is used to record/reproduce onto/from BD (the first optical disc) and CD (the fourth optical disc).

Embodiments 1 - 6 of the first objective optical lens in embodiment A will be described. (Embodiments 1 - 4)

The first objective optical element is structured by a single plastic lens L1. Plural ring zones being diffraction structures DOE shown in Fig. 1 are arranged on light source side surface S1, centering on an optical axis, each zone being formed in a sawtooth (it will be called diffraction structure DOE hereinafter) in a light source side on the single plastic lens L1. This phase structure is designed so that diffraction efficiency is to be the highest with the combination of laser beams of first wavelength λ1 = 405nm and laser beams of second wavelength λ2 = 655nm shown in Table 1 described below. Disc side surface S2 of single plastic lens L1 is an aspherical surface.

Table 1

| S1 surface diffraction order | | |
|---|---|---|
| | 405nm | 655nm |
| Embodiment 1 | second order | first order |
| Embodiment 2 | third order | second order |
| Embodiment 3 | fifth order | third order |
| Embodiment 4 | eighth order | fifth order |

Next, the first objective optical lens will be described in detail below. Single lens L1 has refractive index nd of 1.5435, and abbe constant vd of 56.7, measured by D-line. Refractive index is 1.5601 at $\lambda 1 = 405$ nm, and refractive index is 1.54073 at $\lambda 2 = 655$ nm. Lens data of each embodiment is shown in Tables 2 - 5.

Table 2

(Embodiment 1)

| Wavelength | = | 405nm | 655nm |
|---|---|---|---|
| NA | = | 0.65 | 0.65 |
| OD | = | $\infty$ | $\infty$ |

| Surface | Curvature Radius | Center Thickness | Diffractive Index (405nm) | Diffractive Index (655nm) |
|---|---|---|---|---|
| 1** | 1.5402 | 2.000 | 1.56013 | 1.54073 |
| 2* | -4.2240 | T2 | | |
| 3 | $\infty$ | 0.600 | 1.62100 | 1.58115 |
| 4 | $\infty$ | | | |

\* Aspherical Surface   \*\* HOE Surface

Variable Interval

| | 405nm | 655nm |
|---|---|---|
| T2 | 0.858 | 0.914 |

| S1 Surface Diffraction Order | |
|---|---|
| 405nm | 655nm |
| Second Order | First Order |

Aspherical Surface

|  | S1 | S2 |
|---|---|---|
| k | −0.66513 | −16.80709 |
| A4 | 7.80050E−03 | 4.67427E−02 |
| A6 | 1.78906E−03 | −2.19651E−02 |
| A8 | 6.27460E−05 | −7.10895E−03 |
| A10 | 2.38745E−05 | 1.57510E−02 |
| A12 | 7.21000E−06 | −6.21467E−03 |
| A14 | −1.56549E−05 | −6.77218E−05 |
| A16 | 9.50335E−06 | 3.79988E−04 |
| A18 | 0.00000E+00 | 0.00000E+00 |
| A20 | 0.00000E+00 | 0.00000E+00 |

HOE Coefficient

|  | S1 |
|---|---|
| HWL | 405nm |
| C1 | 0.00000E+00 |
| C2 | 5.23196E−04 |
| C3 | 1.33374E−04 |
| C4 | −6.38024E−05 |
| C5 | 2.66312E−05 |

Table 3

(Embodiment 2)

Wavelength = 405nm 655nm
NA = 0.65 0.63
OD = ∞ ∞

| Surface | Curvature Radius | Center Thickness | Refractive Index (405nm) | Refractive Index (655nm) |
|---|---|---|---|---|
| 1** | 1.6070 | 2.202 | 1.56013 | 1.54073 |
| 2* | −3.3531 | T2 |  |  |
| 3 | ∞ | 0.600 | 1.62100 | 1.58115 |
| 4 | ∞ |  |  |  |

\* Aspherical Surface   \*\* HOE Surface

Variable Interval

|  | 405nm | 655nm |
|---|---|---|
| T2 | 0.800 | 0.853 |

| S1 Surface diffraction Order ||
|---|---|
| 405nm | 655nm |
| Third Order | Second order |

Aspherical Surface

|  | S1 | S2 |
|---|---|---|
| k | −0.75407 | −11.85053 |
| A4 | 3.33991E−03 | 3.81099E−02 |
| A6 | −1.61614E−04 | −2.70432E−02 |
| A8 | 4.13403E−04 | −7.81934E−03 |
| A10 | −2.53734E−04 | 1.39152E−02 |
| A12 | −1.27507E−04 | −3.58225E−03 |
| A14 | 4.26650E−05 | −1.69101E−03 |
| A16 | −1.06779E−05 | 7.56285E−04 |
| A18 | 0.00000E+00 | 0.00000E+00 |
| A20 | 0.00000E+00 | 0.00000E+00 |

HOE Coefficient

|  | S1 |
|---|---|
| HWL | 405nm |
| C1 | −5.89635E−05 |
| C2 | −5.18929E−04 |
| C3 | −5.85886E−05 |
| C4 | 5.52495E−05 |
| C5 | −2.57030E−05 |

Table 4

(Embodiment 3)

Wavelength = 405nm 655nm
NA = 0.65 0.65
OD = ∞ ∞

| Surface | Curvature Radius | Center Thickness | Refractive Index (405nm) | Refractive Index (655nm) |
|---|---|---|---|---|
| 1** | 1.4134 | 1.600 | 1.56013 | 1.54073 |
| 2* | −8.8805 | T2 | | |
| 3 | ∞ | 0.600 | 1.62100 | 1.58115 |
| 4 | ∞ | | | |

* Aspherical Surface   ** HOE Surface

Variable Interval

|  | 405nm | 655nm |
|---|---|---|
| T2 | 0.998 | 1.059 |

| S1 Surface diffraction Order | |
|---|---|
| 405nm | 655nm |
| Fifth order | Third order |

16

Aspherical Surface

|  | S1 | S2 |
|---|---|---|
| k | −0.99987 | −129.35881 |
| A4 | −5.53350E−03 | 4.29075E−02 |
| A6 | −4.73304E−03 | −3.12849E−02 |
| A8 | −5.23193E−05 | −1.20021E−03 |
| A10 | −4.55887E−04 | 8.45338E−03 |
| A12 | −1.52723E−04 | −3.77194E−03 |
| A14 | 1.32991E−04 | −1.56690E−04 |
| A16 | −3.34796E−05 | 2.89077E−04 |
| A18 | 0.00000E+00 | 0.00000E+00 |
| A20 | 0.00000E+00 | 0.00000E+00 |

HOE Coefficient

|  | S1 |
|---|---|
| HWL | 405nm |
| C1 | 0.00000E+00 |
| C2 | −3.67150E−03 |
| C3 | −5.55326E−04 |
| C4 | 2.04081E−05 |
| C5 | 1.68669E−05 |

Table 5

(Embodiment 4)

Wavelength   =      405nm         655nm
NA           =      0.65          0.65
OD           =   ∞              ∞

| Surface | Curvature Radius | Center Thickness | Refractive Index (405nm) | Refractive Index (655nm) |
|---|---|---|---|---|
| 1** | 1.4542 | 1.600 | 1.56013 | 1.54073 |
| 2* | −6.5027 | T2 |  |  |
| 3 | ∞ | 0.600 | 1.62100 | 1.58115 |
| 4 | ∞ |  |  |  |

* Aspherical Surface   ** HOE Surface

Variable Interval

|  | 405nm | 655nm |
|---|---|---|
| T2 | 1.012 | 1.071 |

| S1 Surface diffraction Order | |
|---|---|
| 405nm | 655nm |
| Eighth order | Fifth order |

## Aspherical Surface

|  | S1 | S2 |
|---|---|---|
| k | −0.77919 | −68.11607 |
| A4 | 5.19964E−03 | 5.38139E−02 |
| A6 | 2.72686E−03 | −2.44667E−02 |
| A8 | 2.64540E−03 | −1.01981E−03 |
| A10 | −3.67987E−04 | 7.72696E−03 |
| A12 | −5.99693E−04 | −3.97119E−03 |
| A14 | 7.01885E−05 | 4.65356E−03 |
| A16 | 5.91542E−05 | −1.63987E−03 |
| A18 | 0.00000E+00 | 0.00000E+00 |
| A20 | 0.00000E+00 | 0.00000E+00 |

## HOE Coefficient

|  | S1 |
|---|---|
| HWL | 405nm |
| C1 | 0.00000E+00 |
| C2 | −9.51417E−04 |
| C3 | 1.63933E−04 |
| C4 | 5.09348E−05 |
| C5 | −4.94903E−05 |

Since NA for both optical discs are the same, which is NA 2, optical surface S1 of single lens L1 is structured in a single area. However, when using laser beams having wavelength $\lambda1$ and wavelength $\lambda2$ ($\lambda1 < \lambda2$), comparing NA2 area through which the first laser beams from the first semiconductor laser diode pass, to NA2 area through which the second laser beams from the second semiconductor laser diode pass, NA2 corresponding to the second laser beams are large. Accordingly, NA2 area can be divided into first area AREA 1 corresponding to the NA2 area of the first laser beams including an optical axis and second area AREA 2 which is an area from NA2 of the first laser beams and NA2 of the second laser beams, each area may has a different phase structure.

Diffraction structure DOE is a structure to secure compatibility for recording/reproducing information onto/ from respective optical discs corresponding to the first laser beams having wavelength $\lambda1$ and the second laser beams having wavelength $\lambda2$. Diffraction structure DOE is also a structure to suppress chromatic aberration of an objective optical lens in blue-violet range and a spherical aberration change due to a temperature change, which are to be problems when single lens L1 is formed by a plastic lens.

In diffraction structure, height "d" of a step being the nearest to the optical axis is designed so that the diffraction efficiency of required order of diffraction beams for wavelength 400 nm - 420 nm becomes 100%. When the first laser beams enter into diffraction structure DOE in which the depth of step is set as described above, diffraction beams occurs with diffraction efficiency of not less than 95%, which is highly enough diffraction efficiency, and it becomes possible to correct chromatic aberration in a blue-violet range.

It is possible that, for example, in the case of that the height of step of a diffraction structure is designed so that when laser beams having wavelength of 400 nm enter into the diffraction structure, the diffraction efficiency of the second order diffraction beams becomes 100%, the allocation of the diffraction efficiency is possible so that plus second diffraction beams occur at about 97% diffraction efficiency when the first beams enter into the structure, and plus first diffraction beams occur at about 94% diffraction efficiency when the second beams enter into the structure. The same allocation of diffraction efficiency for the pair of other diffraction orders is possible and practically enough diffraction efficiency can be obtained. It is also possible to put more importance on the second light beam diffraction efficiency by optimizing the diffraction efficiency for the first wavelength of $\lambda1$.

Further, diffraction structure DOE has characteristics that when the wavelength of incident light beams become longer, the spherical aberration changes to an under correction direction and when the wavelength become shorter, the spherical aberration changes to a correction direction. Consequently, it is possible to expand the temperature range by canceling spherical aberration changes caused in a condensing element due to environmental temperature changes.

As described above, it becomes possible to make magnifications of each laser beams M2 and M3 0 while maintaining compatibility over two kinds of optical discs with one objective optical element. It is a preferable configuration since comma aberration caused by the lens-shift of tracking operation generated when recording/reproducing information onto/from the second optical disc and the third optical disc, is cancelled. In this example, diffraction structure DOE is provided on optical surface S1, however it is possible to provide diffraction structure DOE on optical surface S2.

(Embodiment 5)

The first objective optical element is structured by a single plastic lens L1 and both surfaces, light source side surface S1 and optical disc side S2 are aspherical surfaces. The first objective optical lens will be described in detail below. Single lens L1 has refractive index nd of 1.5435, and abbe constant vd of 56.7, which are measured by D-line. Refractive index is 1.5601 at $\lambda 1$ = 405 nm, and refractive index is 1.54073 at $\lambda 2$ = 655 nm. Lens data of each embodiment 5 is shown in Tables 6.

## Table 6

(Embodiment 5)

Wavelength = 405nm 655nm
NA = 0.65 0.65
OD = ∞ 107.771

| Surface | Curvature Radius | Center Thickness | Refractive Index (405 nm) | Refractive Index (655nm) |
|---|---|---|---|---|
| 1** | 1.5234 | 1.995 | 1.56013 | 1.54073 |
| 2* | -4.3388 | T2 | | |
| 3 | ∞ | 0.600 | 1.62100 | 1.58115 |
| 4 | ∞ | | | |

\* Aspherical Surface    \*\* HOE Surface

### Variable Interval

| | 405nm | 655nm |
|---|---|---|
| T2 | 0.844 | 0.953 |

### Aspherical Surface

| | S1 | S2 |
|---|---|---|
| k | -0.67048 | -23.28451 |
| A4 | 7.43388E-03 | 5.04706E-02 |
| A6 | 1.67442E-03 | -2.03530E-02 |
| A8 | 2.41860E-04 | -7.75119E-03 |
| A10 | 5.16096E-05 | 1.67787E-02 |
| A12 | 5.14899E-06 | -4.97488E-03 |
| A14 | -1.13488E-05 | -2.17347E-03 |
| A16 | 8.98861E-06 | 1.07034E-03 |
| A18 | 0.00000E+00 | 0.00000E+00 |
| A20 | 0.00000E+00 | 0.00000E+00 |

(Embodiment 6)

The first objective optical element is structured by single plastic lens L1. Since NA for both optical discs are the same, which is NA 2, optical surface S1 of single lens L1 being a light source side, is structured in a single area. The first objective optical element includes a structure having diffraction structure HOE having plural zone forming a stepping structure, which is provided centering on an optical axis. Based on this phase structure, light beams of first wavelength $\lambda 1$ = 405 nm pass through diffraction structure as a 0 order beams without being diffracted, and beams of second wavelength $\lambda 2$ = 655 nm is diffracted in a plus first order direction. Optical disc side surface S2 of single lens L1 is aspherical surface.

Next, the first objective optical lens will be described in detail below. Single lens L1 has refractive index nd of 1.5435, and abbe constant vd of 56.7, measured by D-line. Refractive index is 1.5601 at $\lambda 1$ = 405 nm, and refractive index is 1.54073 at λ2 = 655 nm. Lens data of each embodiment is shown in Tables 7.

## Table 7

(Embodiment 6)

Wavelength = 405nm        655nm
NA        = 0.65        0.65
OD        = ∞            ∞

| Surface | Curvature Radius | Center Thickness | Refractive Index (405 nm) | Refractive Index (655nm) |
|---|---|---|---|---|
| 1** | 1.5205 | 1.997 | 1.56013 | 1.54073 |
| 2* | -4.4880 | T2 | | |
| 3 | ∞ | 0.600 | 1.62100 | 1.58115 |
| 4 | ∞ | | | |

\* Aspherical Surface    \*\* HOE Surface

## Variable Interval

| | 405nm | 655nm |
|---|---|---|
| T2 | 0.846 | 0.873 |

| S1 Surface diffraction Order | |
|---|---|
| 405nm | 655nm |
| Zero Order | First Order |

## Aspherical Surface

| | S1 | S2 |
|---|---|---|
| k | -0.67272 | -22.85678 |
| A4 | 7.29066E-03 | 4.94935E-02 |
| A6 | 1.66512E-03 | -2.12910E-02 |
| A8 | 2.22527E-04 | -7.93262E-03 |
| A10 | 3.07019E-05 | 1.70108E-02 |
| A12 | -3.22412E-06 | -4.88846E-03 |
| A14 | -1.31982E-05 | -2.16472E-03 |
| A16 | 1.03605E-05 | 1.86921E-03 |
| A18 | 0.00000E+00 | 0.00000E+00 |
| A20 | 0.00000E+00 | 0.00000E+00 |

## HOE Coefficient

| | S1 |
|---|---|
| HWL | 655nm |
| C1 | -2.55466E-03 |
| C2 | -3.08052E-04 |
| C3 | -1.14046E-05 |
| C4 | -7.90158E-06 |
| C5 | -2.77677E-06 |

Optical surface S1 of a laser source side of a semiconductor laser diode has a structure having diffraction structure HOE having plural zone forming a stepping structure, which is provided centering on an optical axis as shown in Figs 3(c) and 3(d).

In diffraction structure HOE1 formed in first area AREA1, the depth of a stepping structure D is set by a value calculated by following formula (2).

$$D \times (N1 - 1) / \lambda 1 = 2 \times q \qquad\qquad (2)$$

Dividing number P being a number of steps in each ring zone is set to 5. Where, $\lambda 1$ is an expression of a wavelength in a unit of micron of laser beams emitted from first emission point EP1, $\lambda 1 = 0.405$ μm, and N1 denotes a refractive index of medium for wave length $\lambda 1$ and q denotes a natural integer.

When the first laser beams having first wavelength of $\lambda 1$ enter into the stepping structure having depth D, an optical path difference between adjacent stepping structures of $2 \times \lambda 1$ (μm) occurs. Since no phase difference is given to the first laser beam, they pass through the stepping structure as it is, without being diffracted (in this specification it is called "zero order diffraction light beams).

When the second laser beams having second wavelength $\lambda 2$, where $\lambda 2 = 0.655$ μm, enter into the stepping structure, the optical path difference between adjacent stepping structure of $\{2 \times \lambda 1/(N1 - 1) \times (N2 -1)/ \lambda 2\} \times \lambda 2 = \{2 \times 0.405/(1.5601 -1) \times (1.54073 - 1) / 0.655\} \times \lambda 2 = 1.194 \times \lambda 2$ occurs. Since the dividing number P is set to 5, the optical path between adjacent ring zones is one wavelength of second wavelength $\lambda 2$ ($(1.194 -1) \times 5 \fallingdotseq 1$, and the second laser beams are diffracted in the plus first order direction (plus first diffraction beams). At that time, the diffraction efficiency of the plus first diffraction beams of the second laser beams is about 87 %, however it is enough light amount to record/reproduce information on/from DVD.

It becomes possible to make magnification factors M2 and M3 of laser beams from one objective optical element for two kinds of optical discs by using this diffraction structure HOE. Since comma aberration caused by lens shift of tracking operation when recording/reproducing information onto/from the second and the third optical discs, is suppressed, it is a preferable structure. In this embodiment, diffraction structure HOE is provided on optical surface S1 of single lens L1 in a semiconductor laser source side surface S1, however diffraction structure HOE may be provided on optical disc side surface S2.

In embodiment A, several embodiments of the second objective optical element, which can be combined with the first embodiment will be described will be described below.

(Embodiment 1)

The second objective optical element is structured by a single plastic lens L1. Light source side surface S1 is divided into first area AREA1 including an optical axis corresponding to an area in NA3 and second area AREA2 corresponding to an area from NA3 to NA1. First area AREAL has plural ring zones centering on the optical axis, which have a sawtooth shaped diffraction structure (it will be called "diffraction structure DOE" hereinafter) as shown in Fig. 1. This phase structure diffracts the laser beams having wavelength $\lambda 1 = 405$ nm as the second order light beams and laser beams having wavelength $\lambda 3 = 785$ nm as the first order light beams. Second area AREA2 has a different structure of aspherical surface from an aspherical surface of a base structure of first area AREA1. Optical disc side surface S2 of singe lens L1 has an aspherical surface.

Next, the second objective optical lens will be described in detail below. Single lens L1 has refractive index nd of 1.5435, and abbe constant vd of 56.7, measured by D-line. Refractive index is 1.5601 at $\lambda 1 = 405$ nm, and refractive index is 1.5601 at $\lambda 3 = 785$ nm. Lens data of each embodiment is shown in Tables 8.

Table 8

(Embodiment 1)

Wavelength = 405nm 785nm
NA = 0.85 0.50
OD = ∞ 12.37

| Surface | Curvature Radius | Center Thickness | Refractive Index (405nm) | Refractive Index (785nm) |
|---|---|---|---|---|
| Stop | ∞ | 0.000 | | |
| 1** | 1.1576 | 2.153 | 1.56013 | 1.53724 |
| 1'* | 1.1610 | 2.153 | 1.56013 | 1.53724 |
| 2* | -2.3464 | T2 | | |
| 3 | ∞ | T3 | 1.62100 | 1.57446 |
| 4 | ∞ | | | |

* Aspherical Surface    ** HOE Surface

1: First surface inside area 1': First surface outside area

Variable Interval

| | 405nm | 785nm |
|---|---|---|
| T2 | 0.539 | 0.200 |
| T3 | 0.100 | 1.200 |

| Diffraction Order | | |
|---|---|---|
| | 405nm | 785nm |
| S1 | Second Order | First Order |

Aspherical Surface

| | S1 | S1' | S2 |
|---|---|---|---|
| k | -0.60089 | -0.77360 | -33.59071 |
| A4 | 1.90646E-02 | 1.76976E-02 | 1.62713E-01 |
| A6 | -1.53903E-03 | 9.19799E-03 | -9.13486E-02 |
| A8 | -2.99405E-03 | -9.59915E-05 | -9.46578E-02 |
| A10 | -3.54131E-02 | 1.27480E-03 | 1.63830E-01 |
| A12 | 5.54394E-02 | -1.71501E-04 | -7.76805E-02 |
| A14 | -3.29492E-02 | 2.41095E-05 | 3.44222E-04 |
| A16 | 8.45833E-03 | 4.09152E-05 | 6.74833E-03 |
| A18 | 0.00000E+00 | 2.31777E-05 | 0.00000E+00 |
| A20 | 0.00000E+00 | -1.30878E-05 | 0.00000E+00 |

HOE Coefficient

| | S1 |
|---|---|
| HWL | 405nm |
| C1 | 8.59064E-04 |
| C2 | 2.75675E-03 |
| C3 | 3.47508E-04 |
| C4 | -7.66015E-03 |
| C5 | 4.09148E-03 |

Second area AREA2 of semiconductor laser beam source side of single lens L1 does not have a phase structure, however a phase structure different from the phase structure of first area RRER1 may be provide in second area AREA2.

Diffraction structure DOE is a structure to secure compatibility for recording/reproducing information onto/ from an optical disc for the first laser beams having wavelength $\lambda 1$ and the third laser beams having wavelength $\lambda 3$. Diffraction structure DOE is also a structure to suppress chromatic aberration of an objective optical lens in blue-violet range and a spherical aberration change due to a temperature change, which are to be problems when single lens L1 is formed by a plastic lens.

In diffraction structure, height "d1" of a step being the nearest to the optical axis is designed so that the diffraction efficiency of required order of diffraction beams for wavelength 400 nm - 420 nm becomes 100%. When the first laser beams enter into diffraction structure DOE in which the depth of step is set as described above, diffraction beams occurs with diffraction efficiency of not less than 95%, which is highly enough diffraction efficiency, and it becomes possible to correct chromatic aberration in a blue-violet range.

It is possible that, for example, in the case of that the height of step of a diffraction structure is designed so that when laser beams having wavelength of 400 nm enter into the diffraction structure, the diffraction efficiency of the second order diffraction beams becomes 100%, the allocation of the diffraction efficiency is possible so that plus second diffraction beams occur at about 97% diffraction efficiency when the first beams enter into the structure, and plus first diffraction beams occur at about 94% diffraction efficiency when the second beams enter into the structure. The same allocation of diffraction efficiency for the pair of other diffraction orders is possible and practically enough diffraction efficiency can be obtained. It is also possible to put more weight on the second light beam diffraction efficiency by optimizing the diffraction efficiency for the first wavelength of $\lambda 1$.

When allowing diffraction structure DOE to have characteristics that when the wavelength of incident light beams become longer, the spherical aberration changes to the under the correction direction and when the wavelength become shorter, the spherical aberration changes to the correction direction, it is possible to expand the temperature range by canceling spherical aberration changes caused in a condensing element due to environmental temperature changes.

The width of each zone of diffraction structure DOE provided on semiconductor laser beam side optical surface S1 of single lens L1 is set so that the spherical aberration for plus first order diffraction light beams is corrected under correction direction by the diffraction action while the magnification factor M4 = -0.166, which is a finite magnification factor against the third light beams. The third light beams passed through diffraction structure DOE and a protective layer of CD form a appropriate light beam spot on a recording surface of a CD by canceling spherical aberration in an over-correction direction caused by the difference between the thickness of a BD protective layer and the thickness of a CD protective layer. In this embodiment, diffraction structure DOE is provided on optical surface S1, however diffraction structure S2 may be provided in optical surface S2.

(Embodiment 2)

The second objective optical element comprises plastic lens L1 and glass lens L2. Diffraction structure HOE having a structure on which plural ring zones are provided centering on the optical axis plastic lens L1 as shown in Figs. 3(c) and 3(d) on disc side surface S2 of plastic lens L1. Diffraction structure HOE does not diffract the first light beams having wavelength $\lambda 1 = 405$ nm and diffracts the second light beams having wavelength $\lambda 2 = 780$ nm in a plus first order direction. Even though it is eliminated in the embodiment, a ring zone structure shown in Figs. 2(a), 2(b) 4 (a) and 4 (b). The first light beams having wavelength $\lambda 1 = 405$ nm and diffracts the second light beams having wavelength $\lambda 2 = 780$ nm pass through the zone structure without diffraction. When the wavelength drifts from the nominal value used when designed, such as wavelength error of a semiconductor laser diode, wavelength change of the semiconductor laser diode due to the temperature rise when the optical pickup apparatus is in actual use, etc., the zone structure corrects the aberration caused by the wavelength difference or the temperature difference described above. The base surface shape of optical surface S1 is a flat and the base surface shape of optical surface S2 is a concave spherical surface. The bases surface may be a surface other than a plain surface or a spherical surface. For example, by making the base surface into a aspherical surface, it increases the degree of freedom to correct out of out-of-axis aberration and to control higher order aberration etc.

Lens L2 is a dual-face aspherical lens of structured by a glass mold and designed so that the spherical aberration determined by the combination with a finite magnification factor determined by a concave surface and a BD protective layer becomes the minimum value. When setting first magnification factor M1 for the first light beams and the fourth magnification factor M4 for the third light beam to zero, the third light beams passed through the CD protective layer becomes an over correction direction without the phase structure. In this embodiment, setting a magnification factor for the third light beams to a finite magnification factor cancels and corrects spherical aberration, which is in a state of a over correction direction, caused by the difference between the thickness of a BD protective layer and the thickness of a CD protective layer.

Next, the second objective optical lens will be described in detail below. Lens L1 is a plastic lens having refractive index nd of 1.54087, and abbe constant vd of 56.3, measured by D-line. Refractive index is 1.52403 at λ1 = 405 nm, and refractive index is 1.50261 at λ3 = 780 nm. Lens L2 is a glass mold lens having refractive index nd of 1.61544, and abbe constant vd of 60.0, measured by D-line. Data of each embodiment is shown in Tables 9.

Table 9

(Embodiment 2)

| Wavelength | = | 405nm | 780nm |
|---|---|---|---|
| NA | = | 0.85 | 0.49 |
| OD | = | ∞ | ∞ |

| Surface | Curvature Radius | Center Thickness | Refractive Index (405nm) | Refractive Index (780nm) |
|---|---|---|---|---|
| 1 | ∞ | 1.000 | 1.52403 | 1.50261 |
| 2** | 20.6120 | 0.200 | | |
| Stop | ∞ | 0.000 | | |
| 3* | 1.3606 | 2.350 | 1.63279 | 1.60854 |
| 4* | -3.0500 | T4 | | |
| 5 | ∞ | T5 | 1.62100 | 1.57466 |
| 6 | ∞ | | | |

* Aspherical Surface  ** HOE Surface

Variable Interval

| | 405nm | 780nm |
|---|---|---|
| T4 | 0.651 | 0.300 |
| T5 | 0.100 | 1.200 |

| Diffraction Order | | |
|---|---|---|
| | 405nm | 780nm |
| S2 | Zero Order | First Order |

Aspherical Surface

| | S3 | S4 |
|---|---|---|
| k | -0.80218 | -48.60938 |
| A4 | 1.31769E-02 | 9.86078E-02 |
| A6 | 3.92899E-03 | -5.69812E-02 |
| A8 | -8.60318E-04 | -2.82327E-02 |
| A10 | 6.17336E-04 | 4.82157E-02 |
| A12 | -3.33724E-05 | -2.01834E-02 |
| A14 | 1.59135E-06 | 1.70182E-03 |
| A16 | -9.41072E-06 | 4.96361E-04 |
| A18 | 0.00000E+00 | 0.00000E+00 |
| A20 | 0.00000E+00 | 0.00000E+00 |

HOE Coefficient

| HWL | S2 |
|---|---|
| | 780nm |
| C1 | 3.42680E-02 |
| C2 | -2.56626E-03 |
| C3 | 2.52626E-03 |
| C4 | -1.77182E-03 |
| C5 | 5.29191E-04 |

When combining lens L1 and lens L2 into a single body, it is natural that a separated lens barrel is used to support a lens. However, it is possible to have a structure having a flange on the circumference of the optical functional portion of lens L1, (through which the first light beams pass) and connecting the flange with lens L2 to combine them into one body by welding or adhering.

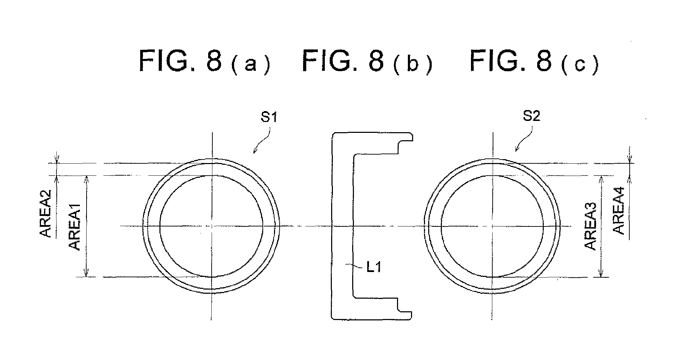

Optical surface S2 of lens L1 is divided first area AREA3 including an optical axis corresponding to an area of NA3 and second area AREA4 corresponding from NA3 to NA1 as shown in Fig. 8(C). First area AREA3 has a structure having diffraction structure HOE having plural zone forming a stepping structure, which is provided centering on an optical axis as shown in Figs 3(c) and 3(d).

In diffraction structure HOE formed in third area AREA3, the depth of a stepping structure D ($\mu$m) is set by a value calculated by following formula (3).

$$D \times (N1 - 1) / \lambda1 = 1 \times q \tag{3}$$

Dividing number P being a number of steps in each zone is set to 2. Where, $\lambda1$ is an expression of a wavelength in a unit of micron of laser beams emitted from first emission point EP1, $\lambda1 = 0.405$ $\mu$m, and N1 denotes a refractive index of medium for wave length $\lambda1$ and q denotes a natural integer.

When the first light beams having first wavelength of $\lambda1$ enter into the stepping structure having depth of D, an optical path difference between adjacent stepping structures of 1 x $\lambda1$ ($\mu$m) occurs. Since no phase difference is given to the first laser beam, they pass through the stepping structure as it is, without being diffracted as a zero order diffraction light beams.

When the third laser beams having third wavelength $\lambda3$, where $\lambda3 = 0.780$ $\mu$m, enter into stepping structure, the optical path difference between adjacent stepping structure of {1 x $\lambda1$/(N1 - 1) x (N3 -1)/ $\lambda3$} x $\lambda3$ = {2 x 0.405/ (1.52403 -1) x (1.50261 - 1) / 0.780} x $\lambda3$ = 0.498 x $\lambda3$ ($\mu$m) occurs. Since the dividing number P is set to 2, the third laser beams are diffracted in the plus/minus first order direction (plus first order diffraction beams and minus first order diffraction beams). At that time, the diffraction efficiency of the plus first order diffraction beams of the second laser beams is a little over 40 %, and minus first order diffraction light beams become flare.

It is possible to improve the diffraction efficiency of plus first order diffraction light beams by optimizing the slant made between a surface of the stepping shape parallel with an optical axis and a surface not being in parallel to the optical axis, for example, by deforming the surface not being in parallel to the optical axis to a surface which is deemed to be a preferable from the point of wavefront aberration. It is also possible to raise the efficiency by changing the medium dispersion of the material forming lens L1 and dividing number P of the stepping shape.

Optical surface S2 of lens L1 is divided into first area AREAL including an optical axis corresponding to an area of NA3 and second area AREA2 corresponding to from NA3 to NA4 as shown in Fig. 8. It becomes possible to increase a degree of design freedom by incorporating plural zone having different phase functions therewith, which is provided centering on an optical axis.

Each zone width of diffraction structure HOE provided on optical surface S2 located in an optical disc side of lens L1 is designed to add spherical aberration in an under correction direction against plus first order diffraction light beams based on diffraction action. The third light beams passed through diffraction structure DOE and a protective layer of CD form a appropriate light beam spot on a recording surface of CD by canceling spherical aberration in an over-correction direction caused by the difference between the thickness of a BD protective layer and the thickness of a CD protective layer.

It becomes possible to make magnification factors M1 and M4 of laser beams from one objective optical element for two kinds of optical discs zero by using this diffraction structure HOE. Since comma aberration caused by lens shift of tracking operation when recording/reproducing information onto/from the first and the fourth optical discs, is suppressed, it is a preferable structure. In this embodiment, diffraction structure HOE is provided on lens L1, however diffraction structure HOE may be provided on lens L2.

Further, a diffraction structure having plural zone shaped in a sawtooth shape in a cross section including an optical axis may be formed in first area AREA1 and second area AREA2 in semiconductor laser beam source side and optical surface S2 in an optical disc side. The diffraction structure DOE is a structure to suppress chromatic aberration of an objective optical element.

In diffraction structure, height "d1" of a step being the nearest to the optical axis is designed so that the diffraction efficiency of required order of diffraction beams for wavelength 400 nm - 420 nm becomes 100%. When the first laser beams enter into diffraction structure DOE 1 in which the depth of the step is set as described above, diffraction beams occurs with diffraction efficiency of not less than 95%, which is highly enough diffraction efficiency, and it becomes possible to correct chromatic aberration in a blue-violet range.

The second objective optical lens of the embodiment of the invention does not have diffraction structure DOE, however diffraction structure DOE may be provided on an optical surface of lens L2. Diffraction structure DOE may be a structure, which is provided on an entire optical surface of lens L2 as a one area or an optical surface of lens L2 having diffraction structure DOE thereon may be divided into two areas centering on the optical axis, each of which has a different diffraction structure DOE each other. The diffraction efficiency of the each area, where the first light beams and the third light beams passes through, may be arranged to be balanced. Or a structure on which the importance of the diffraction efficiency for the first light beams is attached by optimizing the efficiency against the first wavelength $\lambda 1$.

In lens L1 of the embodiment the invention, diffraction structure HOE is provided on optical surface S2 of an optical disc. However, diffraction structure HOE may be provide on optical surface S1.

(Embodiment B)

In embodiment B, the first objective optical element is used for HD (the second optical disc) and CD (the fourth optical disc), and the second objective optical element is used for BD (the first optical disc) and DVD (the third optical disc).

Embodiments 1 - 4 of the first objective optical lens in embodiment B will be described. (Embodiment 1 - 4)

The first objective optical element is structured by a single plastic lens L1. Plural ring zones being diffraction structures DOE as shown in Fig. 1 are arranged on light source side surface S1, centering on an optical axis, each zone being formed in a sawtooth (it will be called diffraction structure DOE hereinafter) in a light source side on the single plastic lens L1. This phase structure diffracts first wavelength $\lambda 1 = 405$nm as the second order light beams and third wavelength $\lambda 3 = 785$nm as the first light beams. Disc side surface S2 of single plastic lens L1 is an aspherical surface.

Next, the first objective optical lens will be described in detail below. Single lens L1 has refractive index nd of 1.5435, and abbe constant vd of 56.7, measured by D-line. Refractive index is 1.5601 at $\lambda 1 = 405$ nm, and refractive index is 1.54072 at $\lambda 3 = 785$ nm. Lens data of embodiment 2 is shown in Tables 11.

Table 10

(Embodiment 1)

Wavelength = 405nm 785nm
NA = 0.65 0.49
OD = $\infty$ $\infty$

| Surface | Curvature Radius | Center Thickness | Refractive Index (405nm) | Refractive Index (785nm) |
|---------|------------------|------------------|--------------------------|--------------------------|
| 1** | 1.2100 | 1.861 | 1.56013 | 1.53724 |
| 2* | -29.1691 | T2 | | |
| 3 | $\infty$ | T3 | 1.62100 | 1.57446 |
| 4 | $\infty$ | | | |

\* Aspherical Surface  \*\* HOE Surface

## Variable Interval

|      | 405nm | 785nm |
|------|-------|-------|
| T2   | 0.763 | 0.456 |
| T3   | 0.600 | 1.200 |

| S1 Surface Diffraction Order | |
|--------------|-------------|
| 405nm        | 785nm       |
| Second Order | First Order |

## Aspherical Surface

|     | S1           | S2           |
|-----|--------------|--------------|
| k   | −1.56992     | −153.67000   |
| A4  | −5.37740E−02 | 1.97724E−01  |
| A6  | −4.10371E−02 | −4.35816E−01 |
| A8  | −1.36342E−03 | 1.65709E−01  |
| A10 | −3.34594E−04 | 1.11318E−01  |
| A12 | −5.92817E−04 | −6.92612E−02 |
| A14 | 9.69128E−04  | −7.45337E−03 |
| A16 | −1.56218E−04 | 3.44208E−03  |
| A18 | −9.53834E−06 | 0.00000E+00  |
| A20 | 0.00000E+00  | 0.00000E+00  |

## HOE Coefficient

|     | S1          |
|-----|-------------|
| HWL | 405nm       |
| C1  | 9.47535E−03 |
| C2  | −3.87396E−02 |
| C3  | −6.36783E−03 |
| C4  | 1.04217E−03 |
| C5  | 2.68472E−04 |

## Table 11

(Embodiment 2)

| Wavelength | = | 405nm | 785nm |
|------------|---|-------|-------|
| NA | = | 0.65 | 0.49 |
| OD | = | ∞ | ∞ |

| Surface | Curvature Radius | Center Thickness | Refractive Index (405nm) | Refractive Index (785nm) |
|---------|-----------------|------------------|--------------------------|--------------------------|
| 1**     | 1.1544          | 1.816            | 1.56013                  | 1.53724                  |
| 2*      | 6.2813          | T2               |                          |                          |
| 3       | ∞               | T3               | 1.62100                  | 1.57446                  |
| 4       | ∞               |                  |                          |                          |

* Aspherical Surface    ** HOE Surface

## Variable Interval

|     | 405nm | 785nm |
|-----|-------|-------|
| T2  | 0.704 | 0.400 |
| T3  | 0.600 | 1.200 |

| S1 Surface Diffraction Order | |
|-------|-------|
| 405nm | 785nm |
| Second Order | First Order |

## Aspherical Surface

|     | S1 | S2 |
|-----|----|----|
| k   | −1.28995 | 22.07844 |
| A4  | −3.58997E−02 | 2.03360E−01 |
| A6  | −3.51241E−02 | −4.70664E−01 |
| A8  | −1.49465E−03 | 2.03945E−01 |
| A10 | −2.84506E−03 | 1.79438E−02 |
| A12 | 9.21710E−05 | −1.29818E−01 |
| A14 | 1.12343E−03 | 7.85760E−02 |
| A16 | −2.27906E−04 | 4.43875E−02 |
| A18 | 1.52130E−06 | 0.00000E+00 |
| A20 | 0.00000E+00 | 0.00000E+00 |

## HOE Coefficient

|     | S1 |
|-----|----|
| HWL | 405nm |
| C1  | 4.75132E−03 |
| C2  | −3.16579E−02 |
| C3  | −7.03900E−03 |
| C4  | −3.105066E−05 |
| C5  | 7.08254E−04 |

Optical surface S1 of single lens L1 in a semiconductor laser diode side is configured by a single area. However, optical surface S1 may be divided into first area AREA1 corresponding to an area in NA3 including an optical axis of single lens L1 and second area AREA2 corresponding for NA3 to NA2, each area having a different phase structure from each other.

Diffraction structure DOE is a structure to secure compatibility for recording/reproducing information onto/from an optical disc for the first laser beams having wavelength $\lambda1$ and the third laser beams having wavelength $\lambda3$. Diffraction structure DOE is also a structure to suppress chromatic aberration of an objective optical lens in blue-violet range and a spherical aberration change due to a temperature change, which are to be problems when single lens L1 is formed by a plastic lens.

In diffraction structure, height "d" of a step being the nearest to the optical axis is designed so that the diffraction efficiency of required order of diffraction beams for wavelength 400 nm - 420 nm becomes 100%. When the first laser beams enter into diffraction structure DOE in which the depth of step is set as described above, diffraction beams occurs with diffraction efficiency of not less than 95%, which is highly enough diffraction efficiency, and it becomes possible to correct chromatic aberration in a blue-violet range.

It is possible that, for example, in the case of that the height of step of a diffraction structure is designed so that when laser beams having wavelength of 400 nm enter into the diffraction structure, the diffraction efficiency of the second order diffraction beams becomes 100%, the allocation of the diffraction efficiency is possible so that plus second diffraction beams occur at about 97% diffraction efficiency when the first beams enter into the structure, and plus first diffraction beams occur at about 94% diffraction efficiency when the second beams enter into the structure. It is also possible to put more importance on the second light beam diffraction efficiency by optimizing the diffraction efficiency for the first wavelength of $\lambda1$.

Further, diffraction structure DOE has characteristics that when the wavelength of incident light beams become longer, the spherical aberration changes to an under correction direction and when the wavelength become shorter, the spherical aberration changes to a correction direction. Consequently, it is possible to expand the temperature range by canceling spherical aberration changes caused in a condensing element due to environmental temperature changes.

Each zone width of diffraction structure HOE provided on optical surface S2 located in an optical disc side of lens L1 is designed to add spherical aberration in an under correction direction against plus first order diffraction light beams based on diffraction action. The third light beams passed through diffraction structure DOE and a protective layer of CD form a appropriate light beam spot on a recording surface of a CD by canceling spherical aberration in an over-correction direction caused by the difference between the thickness of a BD protective layer and the thickness of a CD protective layer.

It becomes possible to make magnification factors M2 and M4 of laser beams from one objective optical element for two kinds of optical discs zero by using this diffraction structure HOE. Since comma aberration caused by lens shift of tracking operation when recording/reproducing information onto/from the first and the second optical discs, is suppressed, it is a preferable structure. In this embodiment, diffraction structure HOE is provided on optical surface S1, however diffraction structure HOE may be provided on optical surface S2.

The first objective optical element is configured by a plastic single lens L1, whose optical source side surface S1 and optical disc side surface S2 are aspherical surfaces.

Next, the second objective optical lens will be described in detail below. Single lens L1 is a plastic lens having refractive index nd of 1.5435, and abbe constant vd of 56.7, measured by D-line. Refractive index is 1.5601 at $\lambda 1 = 405$ nm, and refractive index is 1.5372 at $\lambda 3 = 785$ nm. Lens L2 is a glass mold lens having refractive index nd of 1.5372. Lens data of embodiment 3 is shown in Tables 12.

## Table 12

(Embodiment 3)

| Wavelength | = | 405nm | 785nm |
|---|---|---|---|
| NA | = | 0.65 | 0.49 |
| OD | = | ∞ | 25.067 |

| Surface | Curvature Radius | Center Thickness | Refractive Index (405nm) | Refractive Index (785nm) |
|---|---|---|---|---|
| 1** | 1.5142 | 1.998 | 1.56013 | 1.53724 |
| 2* | -4.4264 | T2 | | |
| 3 | ∞ | T3 | 1.62100 | 1.57446 |
| 4 | ∞ | | | |

\* Aspherical Surface  \*\* HOE Surface

Variable Interval

| | 405nm | 785nm |
|---|---|---|
| T2 | 0.835 | 0.766 |
| T3 | 0.600 | 1.200 |

| S1 Surface Diffraction Order | |
|---|---|
| 405nm | 785nm |
| Zero Order | Zero Order |

Aspherical Surface

|   | S1 | S2 |
|---|---|---|
| k | −0.67313 | −19.38893 |
| A4 | 7.12636E−03 | 5.13723E−02 |
| A6 | 1.81377E−03 | −1.67768E−02 |
| A8 | 2.44550E−04 | −5.65668E−03 |
| A10 | 8.60493E−05 | 1.77117E−02 |
| A12 | 3.48682E−05 | −7.78542E−03 |
| A14 | −4.33546E−06 | −1.24038E−03 |
| A16 | 7.41536E−06 | 1.07034E−03 |
| A18 | 0.00000E+00 | 0.00000E+00 |
| A20 | 0.00000E+00 | 0.00000E+00 |

Single lens L1 is designed so that the spherical aberration of single lens L1 expresses minimum value against the combination of magnification factor M2 = 0 with a single lens itself and a protective layer of HD. Consequently, as the embodiment of the present invention, when setting both second magnification factor M2 for the first light beams and fourth magnification factor M4 for the third light beams zero, the spherical aberration for the third light beams passed through an objective optical element and a protective layer of CD becomes an under correction direction based on the difference between the thickness of a protective layer of HD and the thickness of the protective layer of CD. In this embodiment, setting a magnification factor for the third light beams to a finite magnification factor cancels and corrects spherical aberration being in a over correction direction caused by the difference between the thickness of a HD protective layer and the thickness of a CD protective layer.

The first objective optical element is structured by a single plastic lens L1. Light source side optical surface S1 is divided into first area AREA1 including an optical axis corresponding to an area in NA3 and second area AREA2 corresponding to an area from NA3 to NA2. First area AREA1 has plural ring zones centering on the optical axis, which have a sawtooth shaped diffraction structure HOE as shown in Figs. 3(c) and 3(d). This phase structure does not diffract but passes the laser beams having wavelength $\lambda 1$ = 405 nm as a zero order light beams and diffracts laser beams having wavelength $\lambda 3$ = 785 nm in a plus first order light beam direction. Second area AREA2 of semiconductor laser diode side optical surface S1 is a flat surface and another phase structure may be provided therein.

Next, the second objective optical lens will be described in detail below. Single lens L1 has refractive index nd of 1.5435, and abbe constant vd of 56.7, measured by D-line. Refractive index is 1.5601 at $\lambda 1$ = 405 nm, and refractive index is 1.5601 at $\lambda 3$ = 785 nm. Lens data of each embodiment is shown in Tables 13.

Table 13

(Embodiment 4)

| Wavelength | = | 405nm | 785nm |
|---|---|---|---|
| NA | = | 0.65 | 0.49 |
| OD | = | ∞ | ∞ |

| Surface | Curvature Radius | Center Thickness | Refractive Index (405nm) | Refractive Index (785 nm) |
|---|---|---|---|---|
| 1** | 1.5126 | 1.986 | 1.56013 | 1.53724 |
| 2* | −4.5821 | T2 | | |
| 3 | ∞ | T3 | 1.62100 | 1.57446 |
| 4 | ∞ | | | |

* Aspherical Surface   ** HOE Surface

Variable Interval

|   | 405nm | 785nm |
|---|---|---|
| T2 | 0.845 | 0.660 |
| T3 | 0.600 | 1.200 |

| S1 Surface Diffraction Order | |
|---|---|
| 405nm | 785nm |
| Zero Order | First Order |

**Aspherical Surface**

| | S1 | S2 |
|---|---|---|
| k | −0.67223 | −19.65528 |
| A4 | 7.20022E−03 | 5.13667E−02 |
| A6 | 1.80985E−03 | −1.71766E−02 |
| A8 | 2.50216E−04 | −6.20098E−03 |
| A10 | 8.09347E−05 | 1.76293E−02 |
| A12 | 3.42477E−05 | −8.33342E−03 |
| A14 | −6.15887E−06 | −8.65929E−04 |
| A16 | 6.09601E−06 | 1.07034E−03 |
| A18 | 0.00000E+00 | 0.00000E+00 |
| A20 | 0.00000E+00 | 0.00000E+00 |

**HOE Coefficient**

| | S1 |
|---|---|
| HWL | 785nm |
| C1 | 1.08071E−02 |
| C2 | −4.46747E−04 |
| C3 | −2.16462E−04 |
| C4 | 7.67902E−05 |
| C5 | −1.89784E−05 |

Optical surface S1 in semiconductor laser diode side of single lens L1 may be divided into first area AREA1 corresponding to an area in NA3 including an optical axis of single lens L1 and second area AREA2 corresponding to from NA3 to NA2. Diffraction structure HOE having plural zone in which a stepping structure is arranged centering on optical axis is provided in first area AREA1.

In diffraction structure HOE formed in third area AREA1, the depth of stepping structure D is set by a value calculated by following formula (4).

$$D \times (N1 - 1) / \lambda1 = 2 \times q \tag{4}$$

Dividing number P being a number of stepping structure in each zone is set to 2. Where, $\lambda1$ is an expression of a wavelength in a unit of micron of laser beams emitted from first emission point EP1, $\lambda1 = 0.405\ \mu m$, and N1 denotes a refractive index of medium for wave length $\lambda1$ and q denotes a natural integer.

When the first light beams having first wavelength of $\lambda1$ enter into the stepping structure having depth of D, an optical path difference between adjacent stepping structures of $1 \times \lambda1$ ($\mu m$) occurs. Since no phase difference is given to the first laser beam, they pass through the stepping structure as it is, without being diffracted as zero order diffraction light beams.

When the third laser beams having third wavelength $\lambda3$, where $\lambda3 = 0.780\ \mu m$, enter into stepping structure, the optical path difference between adjacent stepping structure of $\{1 \times \lambda1/(N1 - 1) \times (N3 -1)/ \lambda3\} \times \lambda3 = \{2 \times 0.405/ (1.52403 -1) \times (1.50261 -1) / O.780\} \times \lambda3 = 0.498 \times \lambda3$ ($\mu m$) occurs. Since the dividing number P is set to 2, the third laser beams are diffracted in the plus/minus first order direction (plus first diffraction beams and - first diffraction beams). At that time, the diffraction efficiency of the plus first diffraction beams of the second laser beams is a little over 40 %, and minus first order diffraction light beams become flare.

It is possible to improve the diffraction efficiency of plus first order diffraction light beams by optimizing the slant made between a surface of the stepping shape parallel with an optical axis and a surface not being in parallel to the optical axis, for example, by deforming the surface not being in parallel to the optical axis to a surface which is deemed to be a preferable from the point of wavefront aberration. It is also possible to raise the efficiency by changing the medium dispersion of the material forming lens L1 and dividing number P of the stepping shape.

Embodiments of 1 and 2 of the second objective optical element which can be combined with the first objective optical element in embodiment B will be described below.

(Embodiment 1)

The second objective optical element has two plastic lenses, which are lens L1 and lens L2 from a light beam source side. Lens L1 has a diffraction type phase structure on both surfaces. There is provide diffraction structure HOE on optical light beam source side surface S1 of lens L1, which includes plural ring zones centering on the optical axis, the ring zones having stepping structures as shown in Fig. 3. The phase structure does not diffract but passes the first light beams having wavelength λ1 = 405 nm as zero order light beams and diffracts the second light beams having wavelength λ2 = 780 nm in a plus first order direction. A zone structure shown in Figs. 2 and 4 is provided on optical disc side surface S2 of lens L1. This phase structure does not diffract but passes the laser beams having wavelength λ1 = 405 nm as well as the laser beams having wavelength λ2 =655 without diffraction. When the wavelength drifts from the nominal value used when designed, such as wavelength error of a semiconductor laser diode, wavelength drift of the semiconductor laser diode due to the temperature rise when the optical pickup apparatus is in actual use, etc., the zone structure corrects the aberration caused by the wavelength difference or the temperature difference described above. The base surface shape of optical surface S1 is a flat and the base surface shape of optical surface S2 is a concave spherical surface. The bases surface may be a surface other than a plain surface or a spherical surface. For example, by making the base surface into a aspherical surface, it increases the degree of freedom to correct out of out-of-axis aberration and to control higher order aberration etc.

Next, the second objective optical lens will be described in detail below. Lens L1 is a plastic lens having refractive index nd of 1.5091 measured by D-line, abbe constant vd of 56.4, refractive index of 1.52469 at λ1 = 405 nm and refractive index of 1.50650 at λ2 = 655 nm. Lens L2 is a plastic lens having refractive index nd of 1.5435 measured by D-line and abbe constant vd of 56.7. A flange formed together with each optical functional portion of respective areas of lens L1 and lens L2, through which the first light beams pass, is provided around the optical functional portion. A portion of the flange connects both lens L1 and lens L2 into one body. When combining lens L1 and lens L2 into one body, a lens barrel may be used. The lens data of lenses used in embodiment 1 is shown in Table 14.

## Table 14

### (Embodiment 1)

| Wavelength | = | 405nm | 655nm |
|---|---|---|---|
| NA | = | 0.85 | 0.66 |
| OD | = | ∞ | ∞ |

| Surface | Curvature Radius | Center Thickness | Refractive Index (405nm) | Refractive Index (655nm) |
|---|---|---|---|---|
| 1** | −4.1841 | 1.000 | 1.52469 | 1.50650 |
| 2** | −4.1735 | 0.750 | | |
| Stop | ∞ | 0.000 | | |
| 3* | 1.1687 | 2.223 | 1.56013 | 1.54073 |
| 4* | −3.3479 | T4 | | |
| 5 | ∞ | T5 | 1.62100 | 1.58115 |
| 6 | ∞ | | | |

\* Aspherical Surface  \*\* HOE Surface

### Variable Interval

| | 405nm | 655nm |
|---|---|---|
| T4 | 0.500 | 0.315 |
| T5 | 0.100 | 0.600 |

| Diffraction Order | | |
|---|---|---|
| | 405nm | 655nm |
| S1 | Zero Order | First Order |
| S2 | Zero Order | Zero Order |

## Aspherical Surface

| | S1 | S2 | S3 | S4 |
|---|---|---|---|---|
| k | 0.00000 | 0.00000 | −0.74960 | −257.40862 |
| A4 | 9.21120E−03 | 7.56578E−03 | 2.89588E−02 | 2.14567E−01 |
| A6 | 1.06602E−03 | 1.19880E−04 | 5.32239E−03 | −1.54711E−01 |
| A8 | 8.93656E−04 | 8.40837E−04 | 2.53757E−03 | −9.90315E−02 |
| A10 | 5.31240E−04 | 2.80772E−04 | 1.89327E−03 | 1.40823E−01 |
| A12 | −1.22392E−04 | −1.32266E−05 | −4.56898E−04 | 6.12036E−02 |
| A14 | 0.00000E+00 | −4.13058E−05 | −1.78867E−05 | −1.27759E−01 |
| A16 | 0.00000E+00 | 1.91816E−05 | 1.50238E−04 | 4.10296E−02 |
| A18 | 0.00000E+00 | 0.00000E+00 | 0.00000E+00 | 0.00000E+00 |
| A20 | 0.00000E+00 | 0.00000E+00 | 0.00000E+00 | 0.00000E+00 |

## HOE Coefficient

| | S1 | S2 |
|---|---|---|
| HWL | 650nm | 405nm |
| C1 | 1.32556E−02 | 0.00000E+00 |
| C2 | −2.98169E−03 | 4.46160E−05 |
| C3 | 2.23090E−03 | 2.10821E−04 |
| C4 | −1.61964E−03 | −2.03811E−05 |
| C5 | 2.74251E−04 | 3.05841E−06 |

Optical surface S1 in a semiconductor laser diode side of lens L1 is divided first area AREA1 including an optical axis corresponding to an internal area of NA2 and second area AREA2 corresponding from NA2 to NA1 as shown in Fig. 8. First area AREA1 has a structure having diffraction structure HOE1 having plural zone forming a stepping structure, which is provided centering on an optical axis as shown in Figs 3(c) and 3 (d) .

In diffraction structure HOE1 formed in first area AREA1, the depth of a stepping structure D1 ($\mu$m) is set by a value calculated by following formula (5).

$$D1 \times (N1 - 1) / \lambda1 = 2 \times q \tag{5}$$

Dividing number P being a number of steps in each zone is set to 5. Where, $\lambda1$ is an expression of a wavelength in a unit of micron of laser beams emitted from first emission point EP1, $\lambda1 = 0.405$ $\mu$m, and N1 denotes a refractive index of medium for wave length $\lambda1$ and q denotes a natural integer.

When the first light beams having first wavelength of $\lambda1$ enter into the stepping structure having depth of D, an optical path difference between adjacent stepping structures of 1 x $\lambda1$ ($\mu$m) occurs. Since no phase difference is given to the first laser beam, they pass through the stepping structure as it is, without being diffracted (in this specification it is called "0-order diffraction structure).

When the second laser beams having second wavelength $\lambda2$, where $\lambda2 = 0.655$ $\mu$m, enter into stepping structure, the optical path difference between adjacent stepping structure of $\{2 \times \lambda1/(N1 - 1) \times (N2 -1)/ \lambda2\} \times \lambda2 = \{2 \times 0.405/(1.52469 -1) \times (1.50650 - 1) / 0.0.655\} \times \lambda2 = 1.194 \times \lambda2$ ($\mu$m) occurs. Since the dividing number P is set to 5 and one second of the second wavelength $\lambda2$ occurs between adjacent ring zones $((1.194-1) \times 5 \fallingdotseq 1$, the second laser beams are diffracted in the plus first order direction (plus first order diffraction light beams). At that time, the diffraction efficiency of the plus first diffraction beams of the second laser beams becomes 87%. However it is enough light amounts to record/reproduce information onto/from a DVD.

Depth D2 ($\mu$m) of each step between ring zones which are provided in an aspherical surface of one area corresponding to the optical surface S2 in an optical disc side of lens L1 is set by following formula.

...

$$D2 \times (N1 - 1) / \lambda1 = 5 \tag{6}$$

When the second light beams having second wavelength $\lambda2$ (here $\lambda2 = 0.655\ \mu m$) enter into the stepping structure, optical path difference of $(5 \times \lambda1 / (N1 - 1) \times (N2 - 1) / \lambda2) \times \lambda2\ (\mu m)$ is generated between adjacent ring zones. Where, N2 denotes a medium refractive index of lens L1 for wavelength $\lambda2$. Since the ratio between $\lambda2 / (N2 - 1)$ and $\lambda1 / (N1 - 1)$ is 5 to 3, the optical path difference between adjacent stepping structure is about $3 \times \lambda2\ (\mu m)$. As a result, since substantial phase difference is not given to the second light beams as well as the first light beams, the second light beams pass though the stepping structure as zero-order diffraction light beams without diffraction.

However, when first wavelength $\lambda1$ of the of a semiconductor drifts to $\lambda1' = 0.410\ \mu m$ from original wavelength $0.405\ \mu m$, refractive index of lens L1 for wavelength $0.410\ \mu m$ is 1.524. Consequently the optical path between adjacent ring zones is $5 \times 0.405 / (1.52469 - 1) \times (1.524 - 1) / 0.410) \times \lambda1' = 4.933 \times \lambda1'\ (\mu m)$. Since the aberration caused by this optical path difference cancels the aberration caused by the total objective optical element system, the aberration caused by wavelength drift is corrected.

Optical surface S2 of lens L1 may be divided into third area AREA3 including an optical axis corresponding to an area of NA2 and fourth area AREA4 corresponding to from NA2 to NA1 as shown in Fig. 8(C). It becomes possible to increase a degree of design freedom by incorporating plural zone having different phase functions therewith, which is provided centering on an optical axis.

The second objective optical element comprises a combination of lens L1 having no phase structure and lens L2. The second objective optical element is designed so that the spherical aberration becomes the minimum value by a combination of first wavelength $\lambda1$, magnification factor M1 = 0 and a protective layer of BD. In this embodiment, when setting first magnification factor M1 for the first light beams and fourth magnification factor M4 for the third light beams to 0 (zero), the spherical aberration becomes a state of a over correction direction without a phase structure due to the spherical aberration caused by the difference between the thickness of a BD protective layer and the thickness of a DVD protective layer.

Each zone width of diffraction structure HOE1 provided on optical surface S1 located in a semiconductor laser light source side of lens L1 is designed to add spherical aberration in an under correction direction against plus first order diffraction light beams based on diffraction action. The second light beams passed through diffraction structure HOE1 and a protective layer of BD forms a appropriate light beam spot on a recording surface of a DVD by canceling spherical aberration in an over-correction direction caused by the difference between the thickness of a BD protective layer and the thickness of a DVD protective layer.

It becomes possible to make magnification factors M1 and M3 of laser beams from one objective optical element for two kinds of optical discs by using this diffraction structure HOE. Since comma aberration caused by lens shift of tracking operation when recording/reproducing information onto/from the first and the third optical discs, is suppressed, it is a preferable structure. In this embodiment, diffraction structure HOE is provided with lens L1, however diffraction structure HOE may be provided with lens L2.

Further, diffraction structure DOE having plural zone shaped in a sawtooth shape in a cross section including an optical axis may be formed on semiconductor laser beam source side optical surface S1 in second area AREA2 or in an optical disc side optical surface S2. The diffraction structure DOE is a structure to suppress chromatic aberration of an objective optical element, which is a problem particularly when lens L2 is structured by a plastic lens, and drift of spherical aberration due to the temperature change.

In diffraction structure, height "d1" of a step being the nearest to the optical axis is designed so that the diffraction efficiency of required order of diffraction beams for wavelength 400 nm - 420 nm becomes 100%. When the first laser beams enter into diffraction structure DOE 1 in which the depth of the step is set as described above, diffraction beams occurs with diffraction efficiency of not less than 95%, which is highly enough diffraction efficiency, and it becomes possible to correct chromatic aberration in a blue-violet range.

The second objective optical lens of the embodiment of the invention does not have diffraction structure DOE, however diffraction structure DOE may be provided on an optical surface of lens L2. Diffraction structure DOE may be a structure, which is provided on an entire optical surface of lens L2 as a one area or an optical surface of lens L2 having diffraction structure DOE thereon may be divided into two areas centering on the optical axis, each of which has a different diffraction structure DOE each other. The diffraction efficiency of the each area, where the first light beams and the second light beams passes through, may be arranged to be balanced. For example, when the height of the step is designed so that the diffraction efficiency becomes 100, (where a refractive index of lens L1 for wavelength 400 nm is 1.5273), it becomes possible to allow plus second diffraction light beams to occur with a diffraction efficiency of 96.8 % when the first light beams enter the diffraction structure and to allow the plus first order diffraction light beams to occur with a diffraction efficiency of 93.9 % when the second light beams enter the diffraction structure. As a result, the diffraction efficiency can be balanced as described above. Or a structure on which the importance of the diffraction efficiency for the first light beams is attached by optimizing the efficiency against the first wavelength $\lambda1$.

Further, diffraction structure DOE has characteristics that when the wavelength of incident light beams become longer, the spherical aberration changes to an under correction direction and when the wavelength become shorter, the spherical aberration changes to a correction direction. Consequently, it is possible to expand the temperature range by canceling spherical aberration changes caused in a condensing element due to environmental temperature changes.

In this embodiment, diffraction structure HOE is provided on semiconductor laser source side optical surface S1 and zone structures are formed on optical disc side optical surface S2. However, it is possible to form zone structures on optical surface S1 and diffraction structure HOE on optical surface S2.

(Embodiment 2)

The second objective optical element comprises plastic lens L1 and glass lens L2. Lens L1 has a diffraction type phase structure on both surfaces. There is provide diffraction structure HOE on optical light beam source side surface S1 of lens L1, which includes plural ring zones centering on the optical axis, the ring zones having stepping structures as shown in Fig. 3. The phase structure does not diffract but passes the first light beams having wavelength $\lambda 1$ = 405 nm as zero order light beams and diffracts the second light beams having wavelength $\lambda 2$ = 780 nm in a plus first order direction. A zone structure shown in Figs. 2 and 4 is provided on optical disc side surface S2 of lens L1. This phase structure does not diffract but passes the laser beams having wavelength $\lambda 1$ = 405 nm as well as the laser beams having wavelength $\lambda 2$ =655 without diffraction. When the wavelength drifts from the nominal value used when designed, such as wavelength error of a semiconductor laser diode, wavelength drift of the semiconductor laser diode due to the temperature rise when the optical pickup apparatus is in an actual use, etc., the zone structure corrects the aberration caused by the wavelength difference or the temperature difference described above. The base surface shape of optical surfaces S1 and S2 are flat.

Lens L2 is a dual face aspherical lens structured by a glass mold and designed so that the spherical aberration determined by the combination of a finite magnification factor determined by the concave surface and a BD protective layer becomes the minimum value. When setting first magnification factor M1 for the first light beams and the third magnification factor M3 for the second light beam to zero, the second light beams passed through the CD protective layer becomes an over correction direction without the phase structure.

Next, the second objective optical lens will be described in detail below. Lens L1 is a plastic lens having refractive index nd of 1.5091, and abbe constant vd of 56.4, measured by D-line. Refractive index is 1.52469 at $\lambda 1$ = 405 nm, and refractive index is 1.50650 at $\lambda 2$ = 655 nm. Lens L2 is a glass mold lens having refractive index nd of 1.61544, and abbe constant vd of 31.1, measured by D-line. Data of each embodiment is shown in Tables 15.

Table 15

(Embodiment 2)

Wavelength = 405nm 655nm
NA = 0.85 0.66
OD = ∞ ∞

| Surface | Curvature Radius | Center Thickness | Refractive Index (405nm) | Refractive Index (655nm) |
|---------|------------------|------------------|--------------------------|--------------------------|
| 1** | ∞ | 1.000 | 1.52469 | 1.50650 |
| 2** | ∞ | 0.200 | | |
| Stop | ∞ | 0.000 | | |
| 3* | 1.3119 | 2.078 | 1.72955 | 1.68259 |
| 4* | −20.0994 | T4 | | |
| 5 | ∞ | T5 | 1.62100 | 1.58115 |
| 6 | ∞ | | | |

* Aspherical Surface   ** HOE Surface

Variable Interval

|  | 405nm | 655nm |
|---|---|---|
| T4 | 0.523 | 0.315 |
| T5 | 0.100 | 0.800 |

| Diffraction Order | | |
|---|---|---|
|  | 405nm | 655nm |
| S1 | Zero Order | First Order |
| S2 | Zero Order | Zero Order |

Aspherical Surface

|  | S3 | S4 |
|---|---|---|
| k | −0.77351 | −1233.34049 |
| A4 | 2.12114E-02 | 1.12858E-01 |
| A6 | 1.74677E-03 | −1.42478E-01 |
| A8 | 1.53783E-03 | 3.95981E-02 |
| A10 | 6.59962E-05 | 3.72951E-02 |
| A12 | −3.34177E-04 | −1.07681E-02 |
| A14 | 2.68656E-04 | −1.83389E-02 |
| A16 | −8.15648E-05 | 6.89594E-03 |
| A18 | 0.00000E+00 | 0.00000E+00 |
| A20 | 0.00000E+00 | 0.00000E+00 |

HOE Coefficient

|  | S1 | S2 |
|---|---|---|
| HWL | 650nm | 405nm |
| C1 | 3.09025E-03 | 0.00000E+00 |
| C2 | −2.05172E-03 | −2.14919E-05 |
| C3 | −1.58062E-04 | 3.04017E-05 |
| C4 | −3.74857E-04 | −1.61422E-05 |
| C5 | 6.08432E-05 | 2.67035E-06 |

When combining lens L1 and lens L2 into a single body, it is natural that a separated lens barrel is used to support a lens. However, it is possible to have a structure having a flange on the circumference of the optical functional portion of lens L1, (through which the first light beams pass) and connecting the flange with lens L2 to combine them into one body by welding or adhering.

Optical semiconductor laser light source side surface S1 of lens L1 is divided into first area AREAL including an optical axis corresponding to an area of NA2 and second area AREA2 corresponding to from NA2 to NA1 as shown in Fig. 8(C). First area AREA1 has a structure having diffraction structure HOE1 having plural zone forming a stepping structure, which is provided centering on an optical axis as shown in Figs 3 (a) and 3 (b).

In diffraction structure HOE1 formed in first area AREA1, the depth of a stepping structure D ($\mu$m) is set by a value calculated by following formula (6).

$$D \times (N1 - 1) / \lambda1 = 2 \times q \qquad (6)$$

Dividing number P being a number of steps in each zone is set to 5. Where, $\lambda1$ is an expression of a wavelength in a unit of micron of laser beams emitted from first emission point EP1, $\lambda1 = 0.405$ $\mu$m, and N1 denotes refractive index of medium for wave length $\lambda1$ and q denotes a natural integer.

When the first light beams having first wavelength of $\lambda1$ enter into the stepping structure having depth of D1, an optical path difference between adjacent stepping structures of $2 \times \lambda1$ ($\mu$m) occurs. Since no phase difference is given to the first laser beam, they pass through the stepping structure as it is, without being diffracted as zero order diffraction light beams.

When the third laser beams having second wavelength λ2, where λ2 = 0.655 μm, enter into stepping structure, the optical path difference between adjacent stepping structure of {2 x λ1/(N1 - 1) x (N2 -1) / λ2} x λ$_2$ = {2 x 0.405 / (1.52469 -1) x (1.50650 - 1) / 0.0.655} x λ2 = 1.194 x λ2 (μm) occurs. Since the dividing number P is set to 5, the second laser beams are diffracted in the plus first order direction (plus first order diffraction beams). At that time, the diffraction efficiency of the plus first diffraction beams of the second laser beams becomes about 78 %, which is enough light amount for recording/reading information onto/from DVD.

Depth D2 (μm) of each step between ring zones which are provided in an aspherical surface of one area corresponding to the optical surface S2 in an optical disc side of lens L1 is set by following formula.

$$D2 \times (N1 - 1) / λ1 = 5 \qquad\qquad (7)$$

When the second light beams having second wavelength λ2 (here λ2 = 0.655 μm) enter into the stepping structure, optical path difference of (5 x λ1 / (N1 - 1) x (N2 - 1) / λ2) x λ2 (μm) is generated between adjacent ring zones. Where, N2 denotes a medium refractive index of lens L1 for wavelength λ2. Since the ratio between λ2 / (N2 - 1) and λ1 / (N1 - 1) is 5 to 3, the optical path difference between adjacent stepping structure is about 3 x λ2 (μm). As a result, since substantial phase difference is not given to the second light beams as well as the first light beams, the second light beams pass though the stepping structure as zero-order diffraction light beams without diffraction.

However, when first wavelength λ1 of the of a semiconductor drifts to λ1' = 0.410 μm from original wavelength 0.410 μm, refractive index of lens L1 for wavelength 0.410 μm is 1.524. Consequently the optical path between adjacent ring zones is 5 x 0.405 / (1.52469 - 1) x (1.524 - 1) / 0.410) x λ1' = 4.933 x λ1' (μm). Since the aberration caused by this optical path difference cancels the aberration caused by the total objective optical element system, the aberration caused by wavelength drift is corrected.

Optical surface S2 of lens L1 may be divided into third area AREA3 including an optical axis corresponding to an area of NA2 and fourth area AREA4 corresponding from NA2 to NA1 as, shown in Fig. 8(c). It becomes possible to increase a degree of design freedom by incorporating plural zone having different phase functions therewith, which is provided centering on an optical axis.

Each zone width of diffraction structure HOE1 provided on optical surface S1 located in a semiconductor laser light source side of lens L1 is designed to add spherical aberration in an under correction direction against plus first order diffraction light beams based on diffraction action. The second light beams passed through diffraction structure HOE1 and a protective layer of BD forms a appropriate light beam spot on a recording surface of a DVD by canceling spherical aberration in an over-correction direction caused by the difference between the thickness of a BD protective layer and the thickness of a DVD protective layer.

It becomes possible to make magnification factors M1 and M3 of laser beams from one objective optical element for two kinds of optical discs by using this diffraction structure HOE. Since comma aberration caused by lens shift of tracking operation when recording/reproducing information onto/from the first and the third optical discs, is suppressed, it is a preferable structure. In this embodiment, diffraction structure HOE is provided with lens L1, however diffraction structure HOE may be provided with lens L2.

Further, diffraction structure DOE having plural zone shaped in a sawtooth shape in a cross section including an optical axis may be formed on semiconductor laser beam source side optical surface S1 in second area AREA2 or in an optical disc side optical surface S2. The diffraction structure DOE is a structure to suppress chromatic aberration of an objective optical element.

In diffraction structure, height "d1" of a step being the nearest to the optical axis is designed so that the diffraction efficiency of required order of diffraction beams for wavelength 400 nm - 420 nm becomes 100%. When the first laser beams enter into diffraction structure DOE 1 in which the depth of the step is set as described above, diffraction beams occurs with diffraction efficiency of not less than 95%, which is highly enough diffraction efficiency, and it becomes possible to correct chromatic aberration in a blue-violet range.

The second objective optical lens of the embodiment of the invention does not have diffraction structure DOE, however diffraction structure DOE may be provided on an optical surface of lens L2 other than aforementioned second area AREA2. Diffraction structure DOE may be a structure, which is provided on an entire optical surface of lens L2 as a one area or an optical surface of lens L2 having diffraction structure DOE thereon may be divided into two areas centering on the optical axis, each of which has a different diffraction structure DOE each other. The diffraction efficiency of the each area, where the first light beams and the second light beams pass through, may be arranged to be balanced. For example, when the height of the step is designed so that the diffraction efficiency becomes 100 %, (where a refractive index of lens L1 for wavelength 400 nm is 1.5273), it becomes possible to allow plus second diffraction light beams to occur with a diffraction efficiency of 96.8 % when the first light beams enter the diffraction structure and to allow the plus first order diffraction light beams to occur with a diffraction efficiency of 93.9 % when the second light beams enter the diffraction structure. As a result, the diffraction efficiency can be balanced as described above. Or a structure on which the importance of the diffraction efficiency for the first light beams is attached by optimizing the efficiency against the first wavelength $\lambda 1$.

Further, diffraction structure DOE has characteristics that when the wavelength of incident light beams become longer, the spherical aberration changes to an under correction direction and when the wavelength become shorter, the spherical aberration changes to a correction direction. Consequently, it is possible to expand the temperature range by canceling spherical aberration changes caused in a condensing element due to environmental temperature changes.

In this embodiment, diffraction structure HOE is provided on semiconductor laser source side optical surface S1 and zone structures are formed on optical disc side optical surface S2. However, it is possible to form zone structures on optical surface S1 and diffraction structure HOE on optical surface S2.

(Embodiment C)

The first objective optical element of embodiment 1 of embodiment C will be described below.

The first objective optical element comprises single lens L1 structured by glass material and both surfaces, light source side surface S1 and optical disc side surface S2 have aspherical surface. Single lens L1 has refractive index nd of 1.1.6935, and abbe constant vd of 53.2, measured by D-line. The refractive index is 1.71157 at $\lambda 1 = 405$ nm. Lens data of embodiment 1 is shown in Tables 16.

Table 16

(Embodiment 1)

Wavelength　=　　405nm
NA　　　　　=　　0.85
OD　　　　　=　　∞

| Surface | Curvature Radius | Center Thickness | Refractive Index (405nm) |
|---------|------------------|------------------|--------------------------|
| 1* | 1.0441 | 1.600 | 1.71557 |
| 2* | -11.2393 | 0.447 | |
| 3 | ∞ | 0.100 | 1.61950 |
| 4 | ∞ | | |

* Aspherical Surface Coefficient

Aspherical Coefficient

| | S1 | S2 |
|-----|----|----|
| k | -0.61997 | 97.11742 |
| A4 | 2.48118E-02 | 4.25867E-01 |
| A6 | 2.55383E-03 | -9.17310E-01 |
| A8 | 1.95635E-02 | 1.05361E+00 |
| A10 | -1.26829E-02 | -6.51601E-01 |
| A12 | 7.73815E-05 | 1.69925E-01 |
| A14 | 8.32108E-03 | 0.00000E+00 |
| A16 | -4.35796E-03 | 0.00000E+00 |
| A18 | 0.00000E+00 | 0.00000E+00 |
| A20 | 0.00000E+00 | 0.00000E+00 |

The second objective optical element of embodiment 1 which can be combined with the first objective optical element in embodiment C will be described below.

(Embodiment 1)

The second objective optical element comprises plastic lens L1.

There are provided diffraction structures DOE1 and DOE2 having a structure of arrayed plural ring zones centering on optical axis, the plural ring zones having stepping structures shaped in a sawtooth shape on light source side surface S1 of lens L1 as shown in cross sectional view of Fig. 1. Light source side surface S1 has two areas centering on an optical axis. Diffraction structure DOE1 diffracts light beams having the first wavelength $\lambda 1 = 407$ nm as tenth order light beams, the second light beams having wavelength $\lambda 2 = 655$ nm as sixth order light beams and the third light beams having wavelength $\lambda 3 = 785$ nm as fifth light beams. On the other hand, diffraction structure DOE2, which is different from the diffraction structure in the aforementioned area, provided in outside area of NA3, diffracts the first wavelength $\lambda 1 = 407$ nm as fifth order light beams and the second light beams having wavelength $\lambda 2 = 655$ nm as third order light beams. The surface type being a base of light source side surface S1 and optical disc side surface S2 is an aspherical surface respectively having two areas. An outer axis characteristic for CD reproduction is particularly improved by providing the two areas. It is designed that the light beams having wavelength $\lambda 1$ and the light beams having wavelength $\lambda 2$ enter into lens L1 as converging light beams and the light beams wavelength $\lambda 3$ entire into lens L1 as divergent light beams. Lens data of embodiment 1 is shown in Table 17.

Table 17

(Embodiment 1)

Lend Data

| Objective lens focal length | $f_1$=3.00mm | $f_2$=3.10mm | $f_3$=3.12mm |
|---|---|---|---|
| Image Surface Side Numerical Aperture | NA1:0.65 | NA2:0.65 | NA3:0.51 |
| 2 (Second) Surface Diffraction Surface | n1:10 | n2:6 | n3:5 |
| 2' (Second-dash) Surface Diffraction Surface | n1:5 | n2:3 | |
| Magnification Factor | m1:1/31.0 | m2:1/54.3 | m3:−1/29.9 |

| *1 | | di (407nm) | ni (407nm) | di (655nm) | ni (655nm) | di (785nm) | ni (785nm) |
|---|---|---|---|---|---|---|---|
| 0 | | −90.00 | | −166.02 | | 96.40 | |
| 1 *2 | ∞ | | | 0.01 ($\phi$3.964mm) | | 0.01 ($\phi$3.288mm) | |
| 2 | 1.92355 | 1.65000 | 1.558906 | 1.65000 | 1.540725 | 1.65000 | 1.537237 |
| 2' | 1.98118 | 0.00583 | 1.559806 | 0.00583 | 1.540725 | 0.00583 | 1.537237 |
| 3 | −16.03440 | 1.55 | 1.0 | 1.67 | 1.0 | 1.47 | 1.0 |
| 3' | −13.18912 | 0.00000 | 1.0 | 0.00000 | 1.0 | 0.00000 | 1.0 |
| 4 | ∞ | 0.6 | 1.61869 | 0.6 | 1.57752 | 1.2 | 1.57063 |
| 5 | ∞ | | | | | | |

*1: J-th Surface
*2: (Diaphragm Radius)
*d1 denotes a displacement from J-th Surface to J + 1-th Surface.
*d2' and d3' denote displacements from 2-nd Surface to 2'-nd and Surface, 3-rd Surface to 3'-rd Surface.

Aspherical Surface Data

The second surface (0<h≤1.662 nm: HD DVD/DVD/CD common area) Aspherical Surface Coefficient

| κ | -4.4662 x E-1 | | |
|---|---|---|---|
| A1 | +8.7126 x E-4 | P1 | 4.0 |
| A2 | -1.9063 x E-3 | P2 | 6.0 |
| A3 | +9.2646 x E-4 | P3 | 8.0 |
| A4 | -2.1198 x E-4 | P4 | 10.0 |
| A5 | +1.6273 x E-7 | P5 | 12.0 |
| A6 | +1.3793 x E-6 | P6 | 14.0 |

An Optical Difference Function

(Blaze wavelength 417 nm)

| C2 | -9.6498E-05 |
|---|---|
| C4 | -8.3988E-06 |
| C6 | -3.1284E-06 |
| C8 | 5.6541E-07 |
| C10 | -1.7042E-07 |

The second-dash surface
(0<h<1.662 nm: HD DVD/DVD/CD common area)

Aspherical Surface Coefficient

| κ | -4.1961 x E-1 | | |
|---|---|---|---|
| A1 | +3.0725 x E-3 | P1 | 4.0 |
| A2 | -2.5861 x E-3 | P2 | 6.0 |
| A3 | +9.6551 x E-4 | P3 | 8.0 |
| A4 | -1.3826 x E-4 | P4 | 10.0 |
| A5 | +7.5482 x E-6 | P5 | 12.0 |
| A6 | -7.5795 x E-7 | P6 | 14.0 |

An Optical Difference Function

(Blaze wavelength 417 nm)

| C2 | -2.2814E-04 |
|---|---|
| C4 | -1.1010E-05 |
| C6 | -6.4735E-06 |
| C8 | -4.2984E-07 |
| C10 | 4.7450E-07 |

The third surface (0<h≤1.362 nm: HD DVD/DVD/CD common area)

Aspherical Surface Coefficient

| κ | -8.0653 x E+2 | | |
|---|---|---|---|
| A1 | -5.5926 x E-3 | P1 | 4.0 |
| A2 | +1.1660 x E-2 | P2 | 6.0 |
| A3 | -6.4291 x E-3 | P3 | 8.0 |
| A4 | +1.5528 x E-3 | P4 | 10.0 |
| A5 | -1.3029 x E-4 | P5 | 12.0 |
| A6 | -3.4460 x E-6 | P6 | 14.0 |

The third surface (0<h≤1.362 nm: HD DVD/DVD/CD common area)

Aspherical Surface Coefficient

| κ | -1.2782 x E+3 | | |
|---|---|---|---|
| A1 | -7.3881 x E-3 | P1 | 4.0 |
| A2 | +1.1800 x E-2 | P2 | 6.0 |
| A3 | -6.0862 x E-3 | P3 | 8.0 |
| A4 | +1.6068 x E-3 | P4 | 10.0 |
| A5 | -2.3565 x E-4 | P5 | 12.0 |
| A6 | +1.5370 x E-5 | P6 | 14.0 |

Further, a diffraction structure having plural zones shaped in a sawtooth shape in a cross section including an optical axis may be formed in first area AREA1 and second area AREA2 in semiconductor laser beam source side and optical surface S2 in an optical disc side of Lens L1. Diffraction structure is called DOE hereinafter.

Diffraction structures DOE1 and DOE2 are diffraction structures to record/reproduce information by using light beams having three different wavelengths. Further, diffraction structure is a structure to suppress chromatic aberration of objective optical system OBJ in a blue-violet region and spherical aberration drift due to the temperature change when lens L1 comprises a plastic lens.

In diffraction structure, height "d" of a step being the nearest to the optical axis is designed so that the diffraction efficiency of required order of diffraction beams for wavelength 400 nm - 420 nm becomes 100%. When the first laser beams enter into diffraction structure DOE in which the depth of step is set as described above, diffraction beams occurs with diffraction efficiency of not less than 95%, which is highly enough diffraction efficiency, and it becomes possible to correct chromatic aberration in a blue-violet range.

In diffraction structure, height "d1" of a step being the nearest to the optical axis is designed so that the diffraction efficiency of required order of diffraction beams for wavelength 400 nm - 420 nm becomes 100%. (The Diffractive index of lens L1 for wavelength of 400 nm is 1.559806.) When the first laser beams enter into diffraction structure DOE1 in which the depth of the step is set as described above, plus first order diffraction beams occurs with diffraction efficiency of not less than 93.9%, which is highly enough diffraction efficiency in any wavelength range. Even when the chromatic aberration in a blue-violet range is corrected, chromatic aberration correction in the wavelength of the second light beam range is not over corrected. In this embodiment, it is designed that the diffraction efficiencies of the first light beams and the second light beams are balanced. However, importance may be placed on the diffraction efficiency on the first beam.

The objective optical element in this embodiment does not have diffraction structure DOE on optical disc side optical surface S2. However diffraction structure DOE may be provided on optical surface S2. In this case, diffraction structure DOE may be provided over the surface of lens L1, where diffraction structure has been provided, as a one area. Or different diffraction structure DOEs may be provided on two or three concentric circle shape areas centering on the optical axis. In this case, it may be designed that diffraction efficiencies of the first, the second and third light beams in the area where the first, the second and third light beams commonly pass, is balanced. it may be designed that diffraction efficiencies of the first and the second light beams in the area where the first and the second light beams commonly pass, is balanced. A structure to put importance on the first light beam diffraction efficiency may be designed.

Further, diffraction structures DOE1 and DOE2 have characteristics that when the wavelength of incident light beams become longer, the spherical aberration changes to an under correction direction and when the wavelength become shorter, the spherical aberration changes to a correction direction. Conequetnly, it is possible to expand the temperature range by canceling spherical aberration changes caused in a condensing element due to environmental temperature changes.

(Embodiment D)

In embodiment D, the first objective optical element is dedicated to HD (the second optical disc) and the second objective optical element is commonly used for BD (the first optical disc), DVD (the third optical disc) and CD (the fourth optical disc).

Embodiment 1 of the first objective optical disc in embodiment D will be described below.

(Embodiment 1)

The first objective optical element comprises a single lens L1 structured by plastic material. Light source side surface S1 and optical disc side surface S2 of the first objective optical disc are aspherical surfaces. Refractive index for wavelength $\lambda 1 = 407$ nm is 1.543. Lens data of embodiment 1 is shown in Table 18.

Table 18

(Embodiment 1)

Lend Data
Focal Length                                      $f_1 = 3.2$mm
Image Surface Side Numerical Aperture             NA1:0.65
2 (Second) Surface Diffraction Surface            n1:3
Magnification Factor                              m1:0

| J-th Surface | ri | di(407nm) | ni(407nm) |
|---|---|---|---|
| 0 | | ∞ | |
| 1 (Diaphragm Radius) | ∞ | 0.1 (φ4.16mm) | |
| 2 | 2.02108 | 1.90000 | 1.542771 |
| 3 | -9.54846 | 1.75 | 1.0 |
| 4 | ∞ | 0.6 | 1.61869 |
| 5 | ∞ | | |

*d1 denotes a displacement from J-th Surface to J + 1-th Surface.

Aspherical Surface Data

The second surface

Aspherical Surface Coefficient

| κ | -4.4201 x E-1 | | |
|---|---|---|---|
| A1 | -6.6218 x E-4 | P1 | 4.0 |
| A2 | -1.4866 x E-3 | P2 | 6.0 |
| A3 | +5.2339 x E-4 | P3 | 8.0 |

(continued)

| A4 | -1.0140 x E-4 | P4 | 10.0 |
|---|---|---|---|
| A5 | +8.5260 x E-6 | P5 | 12.0 |
| A6 | -1.1279 x E-6 | P6 | 14.0 |

An Optical Difference Function

(Blaze wavelength 407 nm)

| C2 | -1.0575E-03 |
|---|---|
| C4 | -1.1481E-04 |
| C6 | -1.1143E-04 |
| C8 | 2.1420E-05 |
| C10 | -2-1247E-06 |

The third surface

Aspherical Surface Coefficient

| k | -1.7944 x E+2 | | |
|---|---|---|---|
| A1 | -9.8565 x E-3 | P1 | 4.0 |
| A2 | +1.1687 x E-2 | P2 | 6.0 |
| A3 | -5.1568 x E-3 | P3 | 8.0 |
| A4 | +1.1684 x E-3 | P4 | 10.0 |
| A5 | -1.4004 x E-4 | P5 | 12.0 |
| A6 | +7.0266 x E-6 | P6 | 14.0 |

The second objective optical element of embodiment 1, which can be combined with the first objective optical element in embodiment D will be described below.

(Embodiment 1)

Lens L1 has diffraction type of phase structures on both optical surfaces. There is provided diffraction structure HOE which is a structure having arrayed plural ring zones centering on an optical axis, which have stepping structures shown in Figs. 3(a) - 3(d) on both surfaces, light source side S1 and optical disc side surface S2 of lens L1. This phase structure passes the first light beams having wavelength $\lambda 1 = 408$ nm as zero order light beams and diffracts the second light beams having wavelength $\lambda 2 = 658$ nm and the third light beams having a wavelength $\lambda 3 = 785$ nm in the first order direction. The base surface shapes of light source side surface S1 and optical disc side surface S2 are flat plate shapes.
Lens L2 is a dual face aspherical lens structured by glass mold and designed so that the spherical aberration determined by the combination with magnification factor M1 = 0 and a BD protective layer becomes the minimum value. Consequently, when setting second magnification factor M2 for the thirst light beams, third magnification factor M3 for the second light beams and the fourth magnification factor M4 for the third light beam to zero, the second light beams and the third light beams passed through respectively the objective optical element and the DVD protective layer, and the objective optical element and the CD protective layer, become an over correction direction without the phase structure due to the thickness difference between the protective layer of BD and the protective layer of DVD, and between the protective layer of BD and protective layer of CD.
Next, the second objective optical lens will be described in detail below. Lens L1 is a plastic lens having refractive index nd of 1.5091 measured by D-line, abbe constant vd of 56.4, refractive index of 1.52469 at $\lambda 1 = 405$ nm and refractive index of 1.50650 at $\lambda 2 = 655$ nm. Lens L2 is a glass lens having refractive index nd of 1.6935 measured by D-line, and abbe constant vd of 53.2. When combining lens L1 and lens L2 into a single body, it is natural that a separated lens barrel is used to support a lens. However, it is possible to have a structure having a flange on the circumference of the optical functional portion of lens L1, (through which the first light beams pass) and connecting the flange with lens L2 to combine them into one body by welding or adhering. The lens data of lenses used in embodiment 1 is shown in Table 19.

Table 19

(Embodiment 1)

| Wavelength | = | 408nm | 658nm | 785nm |
|---|---|---|---|---|
| NA | = | 0.65 | 0.65 | 0.45 |
| OD | = | $\infty$ | $\infty$ | $\infty$ |

| Surface | Curvature Radius | Center Thickness | Refractive Index (408nm) | Refractive Index (658nm) | Refractive Index (785nm) |
|---|---|---|---|---|---|
| Stop | $\infty$ | 0.500 | | | |
| 1*** | -12.3047 | 0.700 | 1.52424 | 1.50642 | 1.50324 |
| 2** | $\infty$ | 0.100 | | | |
| 3* | 1.2326 | 1.790 | 1.71493 | 1.68946 | 1.68450 |
| 4* | -5.3193 | T4 | | | |
| 5 | $\infty$ | T5 | 1.62110 | 1.57975 | 1.57326 |
| 6 | $\infty$ | | | | |

* Aspherical Surface    ** HOE Surface (Flat Surface)
***HOE Surface (Aspherical Surface)

Variable Interval

| | 408nm | 658nm | 785nm |
|---|---|---|---|
| T4 | 0.671 | 0.459 | 0.350 |
| T5 | 0.100 | 0.600 | 1.200 |

| Diffraction Order | | | |
|---|---|---|---|
| | 408nm | 658nm | 785nm |
| S1 | Zero Order | First Order | Zero Order |
| S2 | Zero Order | Zero Order | First Order |

Aspherical Surface Coefficient

| | S1 | S3 | S4 |
|---|---|---|---|
| k | 34.28186 | -0.65831 | -357.81531 |
| A4 | 2.22181E-03 | 1.52224E-02 | 6.10895E-02 |
| A6 | 4.73898E-04 | -3.81262E-03 | -2.24309E-02 |
| A8 | -9.99250E-05 | 5.45095E-03 | -5.68441E-03 |
| A10 | 4.44414E-05 | 6.17336E-04 | -6.67093E-04 |
| A12 | 0.00000E+00 | -2.84138E-04 | 2.62805E-03 |
| A14 | 0.00000E+00 | 2.30047E-04 | -2.21754E-04 |
| A16 | 0.00000E+00 | 3.99225E-05 | -1.95820E-04 |
| A18 | 0.00000E+00 | 2.51028E-06 | 0.00000E+00 |
| A20 | 0.00000E+00 | -1.75173E-05 | 0.00000E+00 |

HOE Coefficient

|  | S1 | S2 |
|---|---|---|
| HWL | 658nm | 785nm |
| C1 | 1.01986E-02 | 4.66215E-02 |
| C2 | -2.86245E-03 | -4.51310E-03 |
| C3 | 5.60156E-04 | 1.16932E-02 |
| C4 | -1.16648E-03 | -1.06173E-02 |
| C5 | 1.62918E-04 | 4.28793E-03 |

Optical surface S1 in a semiconductor laser diode side of lens L1 is divided into first area AREA1 including an optical axis corresponding to an internal area of NA2 and second area AREA2 corresponding from NA2 to NA1 as shown in Fig. 8. First area AREA1 has a structure having diffraction structure HOE1 having plural zone forming a stepping structure, which is provided centering on an optical axis as shown in Figs 3(c) and 3 (d).

In diffraction structure HOE1 formed in first area AREA1, the depth of a stepping structure D1 ($\mu$m) is set by a value calculated by following formula (10).

$$D1 \times (N1 - 1) / \lambda1 = 2 \times q \tag{10}$$

Dividing number P being a number of steps in each zone is set to 5. Where, $\lambda1$ is an expression of a wavelength in a unit of micron of laser beams emitted from first emission point EP1, $\lambda1 = 0.405\ \mu$m, and N1 denotes a refractive index of medium for wave length $\lambda1$ and q denotes a natural integer.

When the first light beams having first wavelength of $\lambda1$ enter into the stepping structure having depth of D, an optical path difference between adjacent stepping structures of $1 \times \lambda1$ ($\mu$m) occurs. Since no phase difference is given to the first laser beam, they pass through the stepping structure as it is, without being diffracted as zero order diffraction light beams.

When the third laser beams having third wavelength $\lambda3$, where $\lambda2 = 0.785\ \mu$m, enter into the stepping structure, the optical path difference between adjacent stepping structure of $\{2 \times \lambda1/(N1 - 1) \times (N3 -1)/ \lambda3\} \times \lambda3$ ($\mu$m) occurs. Where, N3 denotes a medium refractive index of lens L1 for wavelength $\lambda3$. Since the ratio between $(N3 - 1)/\lambda3$ and $(N1 - 1)/\lambda1$ is about 2 to 1, the optical path difference between adjacent stepping structure of about $1 \times \lambda3$ ($\mu$m) is generated. Since substantial phase difference is not given to the third light beams as well as the first light beams, the third light beams are not diffracted but pass through as zero order diffraction light beams without diffraction.

When the second laser beams having second wavelength $\lambda2$, where $\lambda2 = 0.655\ \mu$m, enter into stepping structure, the optical path difference between adjacent stepping structure of $\{2 \times \lambda1/ (N1 - 1) \times (N2 -1)/ \lambda2\} \times \lambda2 = \{2 \times 0.405/(1.52469 -1) \times (1.50650 - 1) / 0.0.655\} \times \lambda2 = 1.194 \times \lambda2$ ($\mu$m) occurs. Since the dividing number P is set to 5 and one second of the second wavelength $\lambda2$ occurs between adjacent ring zones $((1.194-1) \times 5 \fallingdotseq 1)$, the second laser beams are diffracted in the plus first order direction (plus first order diffraction light beams). At that time, the diffraction efficiency of the plus first diffraction beams of the second laser beams becomes 87%. However it is enough light amounts to record/reproduce information onto/from a DVD.

Optical surface S2 of lens L1 is divided into first area AREA3 including an optical axis corresponding to an area of NA3 and second area AREA4 corresponding to from NA3 to NA1 as shown in Fig. 8(C). First area AREA3 has a structure having diffraction structure HOE 2 having plural zone forming a stepping structure, which is provided centering on an optical axis as shown in Figs 3 (c) and 3(d).

In diffraction structure HOE 2 formed in third area AREA3, the depth of a stepping structure D ($\mu$m) is set by a value calculated by following formula (11).

$$D \times (N1 - 1) / \lambda1 = 5 \times q \tag{11}$$

Dividing number P being a number of steps in each zone is set to 2. Where, $\lambda1$ is an expression of a wavelength in a unit of micron of laser beams emitted from first emission point EP1, $\lambda1 = 0.405\ \mu$m, and N1 denotes a refractive index of medium for wave length $\lambda1$ and q denotes a natural integer.

When the first light beams having first wavelength of $\lambda1$ enter into the stepping structure having depth of D, an optical path difference between adjacent stepping structures of $5 \times \lambda1$ ($\mu$m) occurs. Since no phase difference is given to the first laser beam, they pass through the stepping structure as it is, without being diffracted as a zero order diffraction light beams.

When the second laser beams having third wavelength $\lambda2$, where $\lambda2 = 0.658\ \mu$m, enter into the stepping structure, the optical path difference between adjacent stepping structure of $\{5 \times \lambda1/(N1 - 1) \times (N2 -1)/ \lambda2\} \times \lambda2$ ($\mu$m)

occurs. Where, N2 denotes a medium refractive index of lens L1 for wavelength λ2. Since the ratio between (N2 - 1) /λ2 and (N1 - 1)/λ1 is about 5 to 3, the optical path difference between adjacent stepping structure of about 3 x λ2 (μm) is generated. Since substantial phase difference is not given to the third light beams as well as the first light beams, the third light beams are not diffracted but pass through as zero order diffraction light beams without diffraction.

When the third laser beams having third wavelength λ3, where λ3 = 0.780 μm, enter into stepping structure, the optical path difference between adjacent stepping structure of {5 x λ1 / (N1 - 1) x (N3 -1)/ λ3} x λ3 = {5 x 0.405/ (1.5242 -1) x (1.5050 - 1) / 0.780} x λ3 = 2.5 x λ3 (μm) occurs. Since the dividing number P is set to 2, the third laser beams are diffracted in the plus/minus first order direction (plus first diffraction beams and - first diffraction beams). At that time, the diffraction efficiency of the plus first diffraction beams of the second laser beams is a little over 40 %, and minus first order diffraction light beams become flare.

It is possible to improve the diffraction efficiency of plus first order diffraction light beams by optimizing the slant made between a surface of the stepping shape parallel with an optical axis and a surface not being in parallel to the optical axis, for example, by deforming the surface not being in parallel to the optical axis to a surface which is deemed to be a preferable from the point of wavefront aberration. It is also possible to raise the efficiency by changing the medium dispersion of the material forming lens L1 and dividing number P of the stepping shape.

Lens L2 is designed so that the spherical aberration determined by the combination with the first wavelength λ1 and a BD protective layer becomes the minimum value. When setting first magnification factor M1 for the first light beams, third magnification factor M3 for the second light beams and the fourth magnification factor M4 for the third light beam to zero, the spherical aberration of the second light beams passed through lens L2 and DVD protective layer, and spherical aberration of the third light beams passed through lens L2 and CD protective layer become an over correction direction due to the thickness differences between a BD protective layer and a DVD protective layer and a CD protective layer.

Each zone width of diffraction structure HOE1 provided on optical surface S1 in a semiconductor laser light source side of lens L1 and of diffraction structure HOE2 provided on optical surface S2 in an optical disc side of lens L1 are designed to add spherical aberration in an under correction direction against plus first order diffraction light beams based on diffraction action. The second light beams passed through diffraction structure HOE1 and a DVD protective layer forms a appropriate light beam spot on a recording surface of a DVD by canceling spherical aberration in an over-correction direction caused by the difference between the thickness of a BD protective layer and the thickness of a DVD protective layer and the thickness of a CD protective layer. The third light beams passed through diffraction structure HOE2 and CD protective layer forms a appropriate light beam spot on a recording surface of a CD.

It becomes possible to allow magnification factors M1, M3 and M4 to be 0 (zero) while one objective optical system covers three kinds of optical discs by using two faces of diffraction structure HOE as described above. Since a comma aberration problem caused by lens shift associated with tracking operation when recording/reproducing information onto/from all optical discs from the first optical disc to the third optical disc can be solved, it is a preferable structure.

Further, diffraction structure HOE is provide both surfaces of lens L1 in this embodiment, however at least one diffraction structure HOE may be provide on lens L2. As long as two faces of diffraction structure HOE are provide, the same effects can be obtained.

Further, a diffraction structure having plural zone shaped in a sawtooth shape in a cross section including an optical axis may be formed in second area AREA2 or fourth area AREA4 in semiconductor laser beam source side and optical surface S2 in an optical disc side of Lens L1. Diffraction structure is called DOE hereinafter.

Diffraction structure DOE1 is a structure to suppress chromatic aberration of objective optical lens OBJ in a blue-violet range which becomes a problem when lens L2 is structured by a plastic lens. Diffraction structure DOE2 is a structure to suppress chromatic aberration of objective optical lens OBJ in a blue-violet and a red ranges which becomes a problem when lens L2 is structured by a plastic lens and spherical aberration drift associated with the temperature change.

In diffraction structure, height "d" of a step being the nearest to the optical axis is designed so that the diffraction efficiency of required order of diffraction beams for wavelength 400 nm - 420 nm becomes 100%. When the first laser beams enter into diffraction structure DOE in which the depth of step is set as described above, diffraction beams occurs with diffraction efficiency of not less than 95%, which is highly enough diffraction efficiency, and it becomes possible to correct chromatic aberration in a blue-violet range.

In diffraction structure, height "d1" of a step being the nearest to the optical axis is designed so that the diffraction efficiency of required order of diffraction beams for wavelength 400 nm - 420 nm becomes 100%. (The Diffractive index of lens L1 for wavelength of 400 nm is 1.559806.) When the first laser beams enter into diffraction structure DOE1 in which the depth of the step is set as described above, plus first order diffraction beams occurs with diffraction efficiency of not less than 93.9%, which is highly enough diffraction efficiency in any wavelength range. Even when the chromatic aberration in a blue-violet range is corrected, chromatic aberration correction in the wavelength of the second light beam range is not over corrected. In this embodiment, it is designed that the diffraction efficiencies of the first light beams and the second light beams are balanced. However, importance may be placed on the diffraction efficiency on the first beam.

The objective optical lens of the embodiment of the invention does not have diffraction structure DOE, however diffraction structure DOE may be provided on an optical surface of lens L2 other than aforementioned second area AREA2 and fourth area AREA4. Diffraction structure DOE may be a structure, which is provided on an entire optical surface of lens L2 as a one area or an optical surface of lens L2 having diffraction structure DOE thereon may be divided into two or three areas centering on the optical axis, each of which has a different diffraction structure DOE each other. The diffraction efficiency of the each area, where from the first light beams to the third light beams passes through, may be arranged to be balanced. For example, when the height of the step is designed so that the diffraction efficiency becomes 100 %, (where a refractive index of lens L1 for wavelength 400 nm is 1.5273), it becomes possible to allow plus second diffraction light beams to occur with a diffraction efficiency of 96.8 % when the first light beams enter the diffraction structure, the plus first order diffraction light beams to occur with a diffraction efficiency of 93.9 % when the second light beams enter the diffraction structure and the plus first order diffraction light beams with a diffraction efficiency of 99.2 % when the third light beams enter the diffraction structure. As a result, the diffraction efficiency can be balanced as described above. Or a structure on which the importance of the diffraction efficiency for the first light beams is attached by optimizing the efficiency against the first wavelength $\lambda 1$.

Further, diffraction structures DOE1 and DOE2 have characteristics that when the wavelength of incident light beams become longer, the spherical aberration changes to an under correction direction and when the wavelength become shorter, the spherical aberration changes to a correction direction. Consequently, it is possible to expand the temperature range by canceling spherical aberration changes caused in a condensing element due to environmental temperature changes.

In this embodiment, diffraction structure HOE is provided on semiconductor laser source side optical surface S1 and zone structures DOE are formed on optical disc side optical surface S2. However, it is possible to form diffraction structure DOE on optical surface S1 and diffraction structure HOE on optical surface S2.

## Claims

1. An optical pickup apparatus for recording and/or reproducing information onto or from a first optical information recording medium having a first protective layer with a thickness of t1 and second optical information recording medium having a second protective layer with a thickness of t2, where t1 # t2, by using first light beams having a wavelength $\lambda 1$, the optical pickup apparatus comprising:

   a first light source for emitting first light beams having the wavelength of $\lambda 1$;
   a first objective optical element; and
   a second objective optical element;

   wherein when recording and/or reproducing the information onto or from the first optical information recording medium, one of the first objective optical lens and the second objective optical lens, which are independently provided in separate bodies, is used to condense the first light beams onto a first information recording surface through the first protective layer, and
   when recording and or reproducing the information onto or from the second optical information recording medium, the other one of the first objective optical lens and the second objective optical lens, is used to condense the first light beams onto a second information recording surface through the second protective layer,
   wherein the first protective layer having thickness of t1 and the second protective layer having thickness of t2 satisfy a following formula,

$$2.5 < t2 / t1.$$

2. The optical pickup apparatus of claim 1, further comprising:

   an objective optical element driving device to move the first objective optical element or the second objective optical element into an optical path of the first light beams emitted from the first light source to the first objective optical information medium or the second objective optical information medium, when recording and/or reproducing information onto or from the first optical information medium or the second optical information medium.

3. The optical pickup apparatus of claim 1, further comprising:

a beam splitter to separate the first light beams entered into the beam splitter to a first direction and a second direction,

wherein the beam splitter is arranged to guide a part of the first light beams separated by the beam splitter to the first direction to the first objective optical element and to guide a part of the first light beams to a second direction separated by the beam splitter to the second objective optical element, while the first objective element and the second objective element are fixedly arranged, when recording and/or reproducing information onto or from the first optical information recording medium and the second optical information recording medium.

4. The optical pickup apparatus of claim 3, further comprising:

a mirror for changing an optical path so as to guide a part of the first light beams separated by the beam splitter to the first direction or the second direction,

wherein the first objective optical element and the second objective optical element are fixedly arranged so that each optical axis of the first objective optical element and the second objective optical element are parallel to each other when recording and/or reproducing information onto or from the first optical information recording medium or the second optical information recording medium.

5. The optical pickup apparatus of claim 1, further comprising:

a mirror capable of moving between a first position and a second position, the mirror being placed in an optical path through which the first light beams travels to the first optical information recording medium and the second optical information recording medium,

wherein when recording and/or reproducing information onto or from the first optical information recording medium and the second optical information recording medium and the first objective optical element and the second objective optical element are fixedly deployed,
the mirror guides the light beams to the first objective optical element, when the mirror is positioned on the first position, and
the mirror guides the light beams to the second objective optical element, when the mirror is positioned on the second position.

6. An optical pickup apparatus for recording and/or reproducing information onto or from a first optical information recording medium having a first protective layer with a thickness of t1 and second optical information recording medium having a second protective layer with a thickness of t2, where t1 # t2, and a third optical information recording medium having a third protective layer with a thickness of t3 having a third recording density which is different from a first recording density of the first optical information recording medium and a second recording density of the second optical information recording medium, by using at least first light beams having a wavelength λ1 and second light beams having a wavelength λ2, where λ1 # λ2, the optical pickup apparatus comprising:

a first light source for emitting first light beams having the wavelength of λ1;
a second light source for emitting second light beams having the wavelength λ2;
a first objective optical element; and
a second objective optical element;

wherein when recording and/or reproducing the information onto or from the first optical information recording medium, one of the first objective optical lens and the second objective optical lens, which are independently provided in a separate body, is used to condense the first light beams onto a first information recording surface through the first protective layer,
when recording and/or reproducing the information onto or from the second optical information recording medium, the other one of the first objective optical lens and the second objective optical lens, is used to condense the first light beams onto a second information recording surface through the second protective layer, and
when recording and/or reproducing the information onto or from the third optical information recording medium, one of the first objective optical lens and the second objective optical lens is used to condense the second light beams onto a third information recording surface through the third protective layer,
wherein the first protective layer having thickness of t1 and the second protective layer having thickness of t2 satisfy a following formula,

$$2.5 < t2 / t1.$$

**7.** The optical pickup apparatus of claim 6, further comprising:

a wavelength selection element to selectively change an emitting direction of first light beams from the first light source and second light beams from the second light source based on a difference of wavelengths of the first beams and the second beams, the wavelength selection element being placed in a position to which both of the first light beams and the second light beams enter,

wherein a mirror to reflect the first light beams or the second light beams to a direction being parallel with axes of the first objective optical element and the second objective optical element is not placed in an optical path between the first and second light sources and the wavelength selection element.

**8.** The optical pickup apparatus of claim 6, further comprising:

an objective optical element driving device to move and position the first objective optical element or the second objective optical element in an optical path through which light beams from the first light beam source to the first optical information recording medium or the second optical information recording medium pass, when recording and or reproducing information onto or from the first optical information recording medium or the second optical information recording medium.

**9.** The optical pickup apparatus of claim 11,
wherein the first light source and the second light source are structured into a single package.

**10.** The optical pickup apparatus of claim 6,
wherein the thickness of protective layers of the second optical information medium and the third optical information medium is the same.

**11.** An optical pickup apparatus for recording and/or reproducing information onto or from a first optical information recording medium having a first protective layer with a thickness of t1 and second optical information recording medium having a second protective layer with a thickness of t2, where t1 # t2, a third optical information recording medium having a third protective layer with a thickness of t3 having a third recording density which is different from a first recording density of the first optical information recording medium and a second recording density of the second optical information recording medium, and a fourth optical recording media having a fourth protective layer with a thickness of t4, where t4 # t1, t4 # t2, by using at least first light beams having a wavelength $\lambda 1$, second light beams having a wavelength $\lambda 2$, where $\lambda 1$ # $\lambda 2$ and third light beams having a wavelength $\lambda 3$, where $\lambda 1$ # $\lambda 3$ and $\lambda 2$ # $\lambda 3$, the optical pickup apparatus comprising:

a first light source for emitting first light beams having the wavelength of $\lambda 1$;
a second light source for emitting second light beams having the wavelength $\lambda 2$;
a third light source for emitting third light beams having the wavelength $\lambda 3$;
a first objective optical element; and
a second objective optical element;

wherein when recording and/or reproducing the information onto or form the first optical information recording medium, one of the first objective optical lens and the second objective optical lens, which are independently provided in separate bodies, is used to condense the first light beams onto a first information recording surface through the first protective layer,
when recording and/or reproducing the information onto or from the second optical information recording medium, the other one of the first objective optical lens and the second objective optical lens, is used to condense the first light beams onto a second information recording surface through the second protective layer,
when recording and/or reproducing the information onto or from the third optical information recording medium, one of the first objective optical lens and the second objective optical lens is used to condense the second light beams onto a third information recording surface through the third protective layer, and
when recording and/or reproducing the information onto or from the fourth optical information recording medium, one of the first objective optical lens and the second objective optical lens is used to condense the third light beams onto a fourth information recording surface through the fourth protective layer,

wherein the first protective layer having thickness of t1 and the second protective layer having thickness of t2 satisfy a following formula,

$$2.5 < t2 / t1.$$

12. The optical pickup apparatus of claim 11,
wherein one of the first objective optical element and the second objective optical element is structured by a glass lens.

13. The optical pickup apparatus of claim 11,
wherein one of the first objective optical element and the second objective optical element is used to record and or reproduce information onto or from the first optical information recording medium, and the other one of the first objective optical element and the second objective optical element is used to record and or reproduce information onto or from the second optical information recording medium, the third optical information recording medium and the fourth optical information recording medium.

14. The optical pickup apparatus of claim 11, further comprising:

a wavelength selection element to selectively change an emitting direction of the first light beams from the first light source and the second light beams from the second light source based on a difference of wavelengths of the first beams and the second beams,

wherein a mirror to reflect the first light beams or the second light beams to a direction being parallel with light beam axes of the first objective optical element and the second objective optical element is not placed in an optical path between the first and second light sources and the wavelength selection element.

15. The optical pickup apparatus of claim 11, further comprising:

an objective optical element driving device to move and position the first objective optical element or the second objective optical element in an optical path through which light beams of from the first to third light beam sources, to the first to the fourth optical information recording media pass, when recording and or reproducing information onto or from the first to the fourth optical information recording media.

16. The optical pickup apparatus of claim 15,
wherein the objective optical element driving device has a lens holder for holding the first objective optical element and the second objective optical element so that each optical axis of the first objective optical element and the second objective optical element is positioned on a same circumference, and
a driving device to rotate a supporting shaft arranged in a center of the lens holder, the driving device being provided on an edge portion of the lens holder,
wherein when recording and/or reproducing information onto or from the first optical information recording medium, the first objective optical element is positioned in the optical axis by a first rotating operation of the lens holder, and
when recording and/or reproducing information onto or from the second optical information recording medium, the second objective optical element is positioned in the optical axis by a second rotating operation of the lens holder.

17. The optical pickup apparatus of claim 11,
wherein the first to the third light sources are structured into a single package.

18. The optical pickup apparatus of claim 13,
wherein the second to the third light sources are structured into a single package.

19. The optical pickup apparatus of claim 18, further comprising:

a wavelength selection element to selectively transmit or reflect the first light beams, the second light beams and the third light beams, the wavelength selection element being deployed on a first position where the first light beams from the first light source, the second light beams from the second light source and the third light beams from the third light source, the second and third light sources being packaged into a single package, are entered;

a collimator to shape incident light beams of the collimator into parallel light beams, the collimator being placed on a second position where from the first to the third light beams transmitted through or reflected by the wavelength selection element are entered;

a beam expander to change a diameter of at least one of the first light beams, the second light beams and the third light beams transmitted through the collimator;

a quarter wave plate placed on a third position where from the first to the third light beams transmitted through the beam expander are guided together; and

a half mirror having a characteristic to transmit a first part of the first light beams and reflect a part of the first light beams, and to transmit or reflect the second and third light beams, the half mirror being placed on a third position where from the first to the third light beams transmitted are entered together;

wherein the first part of the first light beams transmitted through the half mirror are guided into the first objective optical element and the part of the first light beams reflected by the half mirror is guided into the second objective optical element,

wherein the second and third light beams which are transmitted through or reflected by the half mirror are guided into the first objective optical element or the second objective optical element, and

wherein when recording and or reproducing information onto or from the first to the fourth optical information recording media, the first and the second objective optical elements are fixedly deployed.

**20.** The optical pickup apparatus of claim 18, further comprising:

a wavelength selection element to selectively transmit or reflect the first light beams, the second light beams and the third light beams, the wavelength selection element being deployed on a first position where the first light beams from the first light source, the second light beams from the second light source and the third light beams from the third light source, the second and third light sources being packaged into a single package, are entered;

a collimator to shape incident light beams of the collimator into parallel light beams, the collimator being placed on a second position where from the first to the third light beams transmitted through or reflected by the wavelength selection element are entered;

a beam expander to change a diameter of at least one of the first light beams, the second light beams and the third light beams transmitted through the collimator;

a quarter wave plate placed on a third position where from the first to the third light beams transmitted through the beam expander are entered together; and

a mirror capable of moving between a first and a second positions to reflect and guide each of the first light beams, second light beams and the third light beams to the first and second objective optical elements;

wherein when the mirror is deployed on the first position, the mirror guides from the first to the third light beams to the first objective optical element and

when the mirror is deployed on the second position, the mirror guides the first light beams to the second objective optical element,

wherein when recording and or reproducing information onto or from the first to the fourth optical information recording media, the first and the second objective optical elements are fixedly deployed.

**21.** The optical pickup apparatus of claim 6 or 11, further comprising:

a beam splitter capable of separating incident light beams of the beams splitter to a first direction and a second direction, the beam splitter being deployed in an optical path through which the first light beams emitted from the first light source pass,

wherein the beam splitter is arranged to guide a part of the first light beams separated by the beam splitter to the first direction to the first objective optical element and to guide a part of the first light beams to a second direction separated by the beam splitter to the second objective optical element, while the first objective element and the second objective element are fixedly arranged, when recording and/or reproducing information onto or from the first optical information recording medium and the second optical information recording medium.

**22.** The optical pickup apparatus of claim 3 or 21,

wherein the beam splitter is a half mirror for separating incident light beams of the beam splitter into transmitted light beams and reflected light beams.

23. The optical pickup apparatus of claim 3 or 21,
wherein the beam splitter is a polarized beam splitter for separating incident light beams of the beam splitter based on a polarization element of incident light beams of the polarized beam splitter.

24. The optical pickup apparatus of claim 21, further comprising:

a mirror to change a direction of the optical path so as to guide a part of the first light beams which travel in the first direction or the second direction, which is separated by the beam splitter to the first objective optical element or the second objective optical element,

wherein the first objective optical element and the second objective optical element are fixedly arranged so that each optical axis of the first objective optical element and the second objective optical element are parallel to each other when recording and/or reproducing information onto or from the first optical information recording medium or the second optical information recording medium.

25. An optical pickup apparatus for recording and/or reproducing information onto or from a first optical information recording medium having a first protective layer with a thickness of t1 and a second optical information recording medium having a second protective layer with a thickness of t2, where $t1 \neq t2$, a third optical information recording medium having a third protective layer with a thickness of t3 having a third recording density which is different from a first recording density of the first optical information recording medium and a second recording density of the second optical information recording medium, and a fourth optical recording media having a fourth protective layer with a thickness of t4, where $t4 \neq t1$, $t4 \neq t2$, by using at least first light beams having a wavelength $\lambda1$, where 400 nm $\leq \lambda1 \leq$ 420 nm, second light beams having a wavelength $\lambda2$, where 640 nm $\leq \lambda2 \leq$ 670 nm and third light beams having a wavelength $\lambda3$, where 780 nm $\leq \lambda3 \leq$ 800 nm, the optical pickup apparatus comprising:

a first light source for emitting first light beams having the wavelength of $\lambda1$;
a second light source for emitting second light beams having the wavelength $\lambda2$;
a third light source for emitting third light beams having the wavelength $\lambda3$;
a first objective optical element; and
a second objective optical element;

wherein when recording and/or reproducing the information onto or from the first optical information recording medium, the first objective optical lens is used to condense the first light beams onto a first information recording surface through the first protective layer,
when recording and or reproducing the information onto or from the second optical information recording medium, the second objective optical lens is used to condense the first light beams onto a second information recording surface through the second protective layer,
when recording and or reproducing the information onto or from the third optical information recording medium, the second objective optical lens is used to condense the second light beams onto a third information recording surface through the third protective layer, and
when recording and or reproducing the information onto or from the fourth optical information recording medium, the second objective optical lens is used to condense the third light beams onto a fourth information recording surface through the fourth protective layer,
wherein the first protective layer having thickness of t1 and the second protective layer having thickness of t2 satisfy a following formula,

$$2.5 < t2 / t1.$$

wherein the second objective optical lens comprises
a first area through which a center light beam portion of the first, the second and the third light beams including an optical axis of the second objective optical lens pass, and
a second area through which optical beams of an outer side of the center light beam portion pass,
to condense the first light beams passing through the first area and the second area onto or from the second optical information recording medium, when recording and/or reproducing information onto or from the second optical information recording medium,

to condense the second light beams passing through the first area and the second area onto or from the third optical information recording medium, when recording and/or reproducing information onto or from the third optical information recording medium, and

to condense the third light beams passing through the first area onto or from the fourth optical information recording medium, when recording and/or reproducing information onto or from the fourth optical information recording medium.

**26.** The optical pickup apparatus of claim 25,

wherein the second objective optical element includes a first diffraction structure in the first area, and a second diffraction structure being different from the first diffraction structure in the second area,

wherein the first and the second light beams enter into the second objective optical element as converging light beams and the third light beams enter into the second objective optical element as diverging light beams.

**27.** The optical pickup apparatus of claim 25,

wherein the second objective optical element diffracts from the first to the third light beams entered into the first diffraction structure as tenth order, sixth order and fifth order diffraction light beams and diffracts from the first to the second light beams as fifth order and third order diffraction light beams.

**28.** The optical pickup apparatus of claim 19 or 20,

wherein the collimator comprises a step difference structure to correct chromatic aberration which occurs with at least one of the first objective optical element and the second objective optical element.

**29.** The optical pickup apparatus of claim 20 or 21,

wherein the beam expander corrects at least one of spherical aberration caused by the differences of protective layers of from the first to the fourth optical information recording media,

chromatic aberration or spherical aberration caused by wavelength drift or wavelength switching, and

spherical aberration caused by temperature drift.

**30.** The optical pickup apparatus of claim 20 or 21,

wherein the beam expander comprises plural optical elements and at least one of the plural optical elements is capable of moving in a optical axis direction of the beam expander.

**31.** The optical pickup apparatus of claim 20 or 21,

wherein the beam expander contains an optical element having an optical surface on which plural step difference structures to correct the chromatic aberration.

**32.** The optical pickup apparatus of claim 1, 6, 11 or 25,

wherein at lease one of the first objective optical element and the second objective optical element is structured by plastic material and is a single optical element having a phase structure thereon.

**33.** The optical pickup apparatus of claim 1, 6, 11 or 25,

wherein at least one of the first objective optical element and the second objective optical element includes a first optical element and a second optical element, and at least one of the first optical element and the second optical element is structured by plastic.

**34.** The optical pickup apparatus of claim 1, 6, 11 or 25,

wherein at least one of the first objective optical element and the second objective optical element includes a first optical element and a second optical element, and at least one of the first optical element and the second optical element is structured by plastic and the other one of the first optical element and the second optical element has a phase structure thereon.

# FIG. 1 (a)

DOE

100  100  100  100 100 100

d1

OPTICAL AXIS

# FIG. 1 (b)

DOE

100  100  100          100

OPTICAL AXIS

## FIG. 2 ( a )

DOE

101

101

101

101

101

102

102

102

102

102

OPTICAL AXIS

## FIG. 2 ( b )

DOE

101

101

101

101

102

102

102

102

102

102

OPTICAL AXIS

# FIG. 3 ( a )

OPTICAL AXIS

# FIG. 3 ( b )

OPTICAL AXIS

# FIG. 3 ( c )

OPTICAL AXIS

# FIG. 3 ( d )

OPTICAL AXIS

# FIG. 4 ( a )

DOE / NPS

104
104
104
104 104
104
104
105
105 105
105
105 105 105
105
105

OPTICAL AXIS

# FIG. 4 ( b )

DOE / NPS

104
104
104 104
104
104

105
105

OPTICAL AXIS

# FIG. 5

OD1~OD4

OBJ1 OBJ2 10

AP

QWP

PU1

L2
EXP
L1

CY1 SL1

PBS

PD

COL

DP

LD3

BS

2L1P

LD2 LD1

# FIG. 6

14 ( SUPPORTING SHAFT )

23B ( MAGNET )

13 ( LENS HOLDER )

13A ( CIRCUMFERENCE )

OBJ1 ( OBJECTIVE OPTICAL LENS )

21A

22A

21B ( TRACKING COIL )

20 ( TRACKING ACTUATOR )

22B ( MAGNET )

23A

15 ( CHASSIS )

OBJ2 ( OBJECTIVE OPTICAL LENS )

10 ( OBJECTIVE LENS ACTUATOR APPARATUS )

FIG. 7

FIG. 8 (a)　　FIG. 8 (b)　　FIG. 8 (c)

FIG. 9

OD2~OD4

OD1

OBL3

OBL4

DP

PBS1

1L1P

PD1

PD2    PBS2

2L1P

COL

EXP    QWP    HMR

MR

EP 1 596 383 A2

FIG. 10